# EUROPÄISCHE PATENTSCHRIFT

(11) **EP 3 496 579 B1**
(45) Veröffentlichungstag und Bekanntmachung des Hinweises auf die Patenterteilung: **03.08.2022**
(21) Anmeldenummer: 18706466.2
(22) Anmeldetag: 15.02.2018
(51) Int. Cl.: A47J 31/24, A23F 5/18

(54) **FILTERKAPSEL ZUR NACHFILTRATION VON KAFFEE UND VERWENDUNG HIERVON**
FILTER CAPSULE FOR THE POST-FILTRATION OF COFFEE, AND USE OF THE SAME
CAPSULE FILTRANTE POUR LA POST-FILTRATION DE CAFÉ ET UTILISATION DE LADITE CAPSULE

(30) Priorität: 20.02.2017 DE 102017202685
(43) Veröffentlichungstag der Anmeldung: 19.06.2019
(73) Patentinhaber: WMF GmbH, 73312 Geislingen/Steige (DE)
(72) Erfinder: ARNDT, Peter, 89134 Blaustein (DE); BAIS, Johannes, 89075 Ulm (DE); OBERHANSL, Denis, 89081 Ulm (DE); SCHIRRMACHER, Philipp, 89073 Ulm (DE); STARTZ, Armin, 89197 Weldenstetten (DE)
(74) Vertreter: Pfenning, Meinig & Partner mbB
(86) Internationale Anmeldenummer: PCT/EP2018/053765
(87) Internationale Veröffentlichungsnummer: WO 2018/149911

(56) Entgegenhaltungen:
- WO-A1-2011/097866
- WO-A1-2018/011020
- DE-A1- 2 341 187
- US-A- 2 626 558
- US-A1- 2008 038 441

## Beschreibung

Es wird eine Filterkapsel zur Nachfiltration von extrahiertem Kaffee bereitgestellt, die dadurch gekennzeichnet ist, dass sie ein Gehäuse und mindestens ein Filterelement enthält oder daraus besteht. Das Gehäuse enthält einen Boden, mindestens eine Seitenwand und mindestens einen Deckel oder besteht daraus, wobei das mindestens eine Filterelement in einem Innenraum des Gehäuses angeordnet ist. Mit der erfindungsgemäßen Filterkapsel ist es möglich, an einem Brühsieb extrahierten Kaffee einer Nachfiltration zu unterziehen, sodass suspendierte Partikel und emulgierte Öle bestimmter Größe durch das Filterelement der Filterkapsel vom Kaffee abgetrennt werden und ein neuartiger Kaffee entsteht. Es wird daher die Verwendung der erfindungsgemäßen Filterkapsel zur Nachfiltration von Kaffee vorgeschlagen.

Kaffeemaschinen zur Zubereitung von druckextrahierten Kaffee-Spezialitäten (z.B. Espresso oder Cappuccino) nutzen in aller Regel Brühsysteme, bei denen das Kaffeegetränk unter Druck (ca. 4-16 bar) gebrüht wird. Hierzu werden Brühsiebe eingesetzt, welche automatisch reinigbar sind und ein Zusetzen der Brühsiebe durch Ablagerungen von Bestandteilen der Kaffeebohne (z.B. unlösliche Bestandteile der gemahlene Kaffeebohnen und Kaffeeöle) während dem Betrieb vermeiden. Das Zusetzen der Brühsiebe wird im Allgemeinen durch relativ große Siebdurchlässe (d.h. weitmaschige Sieblöcher) erreicht. Für bestimmte Kaffee-Spezialitäten wie Espresso und Cappuccino sind Partikel, welche hierbei die relativ groben Sieblöcher passieren, sogar erwünscht. Diese sind mitverantwortlich für den besonderen Geschmack dieser Kaffee-Spezialitäten.

Zudem entsteht bei der Druckbrühung dieser Kaffee-Spezialitäten durch Druckabfall am Brühsieb eine sogenannte "Crema", die sich hauptsächlich auch emulgierten Kaffeeölen zusammensetzt, aber auch Partikel und teilweise expandiertes CO₂ enthält. Die "Crema" ist bei diesen Kaffee-Spezialitäten ebenfalls erwünscht, da sie zur Optik bzw. zum Geschmack beiträgt.

Klassischer Filterkaffee weist dagegen nahezu keine Partikel und auch keine "Crema" auf. Der Grund hierfür ist, dass klassischer Filterkaffee in aller Regel ohne beaufschlagten Druck gebrüht wird d.h. der Brühdruck entspricht meist nur dem hydrostatischen Druck der Wassersäule über dem Filterboden, Zumindest werden bei der Herstellung von klassischem Filterkaffee keine Extraktionsdrücke wie bei der Espressoherstellung (ca. 4-16 bar) erreicht. Die Folge hiervon ist, dass die Herstellung von klassischem Filterkaffee mit hohen Brühzeiten verbunden ist. Da zudem bei dessen Herstellung deutlich feinere (d.h. engmaschigere) Siebe verwendet werden (Porendurchmesser im Bereich von 1 bis 50 µm) weisen die Siebböden dieser Siebe oft eine größere Fläche auf. Dies verhindert, dass die Extraktionszeit nicht unnötig verlängert wird. Oft sind die hier verwendeten Siebe aus Papier und/oder Metall hergestellt.

Die DE 2 341 187 A1 offenbart eine dichthaltende, dünnwandige Verpackung zur Konditionierung von frisch geröstetem Kaffee, die dadurch gekennzeichnet ist, dass sie einen Aktivkohleeinsatz enthält, der zur Absorption mindestens eines Teiles der infolge einer Entgasung des Kaffees entstehenden flüchtigen Produkte bestimmt ist.

Die US 2008/038441 A1 offenbart einen Getränkespender enthaltend einen Hochdruckbrühbereich, einen Niederdruckbereich und einen Filter, wobei der Filter dazu konfiguriert ist, mindestens einige cholesterinreiche Öle aus dem gebrühten Getränk zu entfernen.

Die US 2,626,558 A offenbart eine Kaffeemaschine und ein Verfahren, die sich Herstellung eines Kaffeegetränks eignen, das ohne ranzig, unappetitlich und trüb zu werden über einen langen Zeitraum aufbewahrt werden kann.

Die WO 2011/097866 A1 offenbart eine Filtrationsvorrichtung einer Druckkaffeemaschine, die eine Filteroberseite und eine Filterunterseite aufweist, wobei eine Gas-Flüssigkeits-Mischkammer zwischen einer unteren Filterabdeckung und einer oberen Filterabdeckung ausgebildet ist und ein Kaffeefiltersieb in eine mittlere Öffnung des unteren Deckels und/oder eine mittlere Durchflußbegrenzungsöffnung eingesetzt ist.

Die WO 2018/011020 A1 offenbart eine Kaffeemaschine zur Zubereitung von druckextrahierten Kaffee mit geringem Partikelgehalt.

Ausgehend hiervon war es die Aufgabe der vorliegenden Erfindung eine Vorrichtung bereitzustellen, mit der es möglich ist, optional im Zusammenwirken mit Kaffeemaschinen zur Zubereitung von (druck-)extrahierten Kaffee-Spezialitäten, einen extrahierten Kaffee mit geringem Gehalt an dispergierten Partikeln bereitzustellen.

Die Aufgabe wird gelöst durch die Filterkapsel zur Nachfiltration von extrahiertem Kaffee mit den Merkmalen von Anspruch 1 und die Verwendung der Filterkapsel mit den Merkmalen von Anspruch 15. Die abhängigen Ansprüche zeigen vorteilhafte Weiterbildungen auf.

Erfindungsgemäß wird eine Filterkapsel zur Nachfiltration von extrahiertem, bevorzugt druckextrahierten, Kaffee bereitgestellt, wobei die Filterkapsel ein Gehäuse und mindestens ein Filterelement enthält oder daraus besteht. Das Gehäuse enthält einen Boden, mindestens eine Seitenwand und mindestens einen Deckel oder besteht daraus und das mindestens eine Filterelement ist in einem Innenraum des Gehäuses angeordnet. Die Filterkapsel ist dadurch gekennzeichnet, dass der Deckel mindestens einen durchgehenden Fluideinlass aufweist, der benachbart zu einer Mittelachse einer Grundfläche des Deckels angeordnet ist, und der Deckel mindestens einen durchgehenden Fluidauslass aufweist.

Durch das Filterelement in der Filterkapsel kann in der erfindungsgemäßen Filterkapsel ein Filtrationsprozess stattfinden, der einem Brühvorgang von Kaffee unter Druck nachgeschaltet ist. Durch das Filterelement in der Filterkapsel können dem druckextrahierten Kaffee feinste Bestandteile, d.h. im (druck-)extrahierten Kaffee befindliche suspendierte Partikel (z.B. Sedimente und emulgierte Kaffeeöle) entzogen werden. Durch Abfiltrieren der Kaffeeöle bzw. den Filtrationsvorgang an sich wird eine evtl. entstandene "Crema" abgefiltert bzw. zerstört. Durch das Filtrieren des (druck-)extrahierten Kaffees durch das Filterelement der Filterkapsel erhält das Kaffeegetränk somit einen anderen Geschmack und aufgrund dem Fehlen der feinsten, dispergierten Bestandteile, als auch der "Crema", eine deutlich andere Optik, Folglich ist ein entscheidender Vorteil der erfindungsgemäßen Filterkapsel, dass ein Kaffeeprodukte bereitgestellt werden kann, dass sich von klassischem (druck-)gebrühten Kaffee unterscheidet. Das Kaffeeprodukt ist geschmacklich nah am bzw. sogar besser als klassischer Filterkaffee und lässt sich auch in kleinen Mengen (z.B. tassenweise) mit einer von druckextrahierten Kaffeemaschinen bekannten Geschwindigkeit bereitstellen.

Wird die erfindungsgemäße Filterkapsel zusammen mit einer druckextrahierenden Kaffeemaschine verwendet, können sowohl klassische druckextrahierte Kaffeeprodukte als auch ein Kaffeeprodukt bereitgestellt werden, das sehr ähnlich bis identisch zu einem klassischen Filterkaffee ist. Folglich können dem Bediener der Kaffeemaschine auf schnelle Art und Weise in Tassenvolumen unterschiedliche Geschmackserlebnisse geboten werden.

Ein weiterer Vorteil ist, dass die Filterkapsel kostengünstig herstellbar und einfach in der Handhabung ist. Es kann beispielsweise in einer Kaffeemaschine ein Aufnahmebereich vorgesehen sein, in dem die Filterkapsel auf einfache Art und Weise an die Kaffeemaschine angebunden bzw. angeschlossen werden kann und auch auf einfache Art und Weise wieder von der Kaffeemaschine entfernt werden kann. Denkbar sind hierbei Aufnahmebereiche, wie sie bereits von Kaffeemaschinen bekannt sind, in welche mit Kaffee gefüllte Kapseln angebunden werden.

Das Filterelement der Filterkapsel kann mindestens einen Filter enthalten, der bevorzugt eine maximale Porengröße von 80 µm aufweist und bevorzugt eine Dicke von 0,1 mm bis 10 mm aufweist. Das Filterelement kann mindestens einen Feinfilter enthalten, der bevorzugt eine maximale Porengröße von 25 µm aufweist und besonders bevorzugt eine Dicke von 0,1 mm bis 10 mm aufweist. Das Filterelement kann mindestens einen Feinstfilter enthalten, der bevorzugt eine maximale Porengröße von 10 µm aufweist und besonders bevorzugt eine Dicke von 0,1 mm bis 10 mm aufweist. Das Filterelement kann auch mindestens einen (z.B. oben genannten) Filter, mindestens einen Feinfilter und mindestens einen Feinstfilter enthalten oder daraus bestehen. Besonders bevorzugt ist der mindestens eine Feinfilter stromabwärts des Filters und der mindestens eine Feinstfilter stromabwärts des Feinfilters angeordnet.

Bevorzugt ist, dass die maximalen Porengröße (Maschigkeit) des Feinfilters kleiner ist als des Filters und die maximale Porengröße des Feinstfilters kleiner ist als des Feinfilters. Die Ausstattung des Filterelements mit einem Feinfilter und/oder Feinstfilter hat den Vorteil, dass stufenweise kleinere Partikel von dem Kaffee getrennt werden können. Zudem kann mit der resultierenden Mehrlagigkeit des Filterelements eine deutlich höhere Kapazität des Filterelements erreicht werden als wenn nur ein Filter, Feinfilter oder Feinstfilter verwendet wird. Die zur Verfügung stehende Filterfläche wird daher optimal ausgenutzt.

Die maximale Porengröße eines Elements (z.B. des Filterelements bzw. des Filters, des Feinfilters und Feinstfilters und auch des Brühsiebs) kann auf einfache Art und Weise dadurch bestimmt werden, indem eine Dispersion von Partikeln bekannter Größenverteilung durch das Element geströmt wird und anschließend die Größenverteilung der Partikel auf der Seite des Eintritts der Dispersion und/oder der Seite des Austritts der Dispersion über ein mikroskopisches Verfahren bestimmt wird.

Das Filterelement kann eine Länge, eine Breite und/oder einen Durchmesser im Bereich von 1 bis 10 cm, bevorzugt 2 bis 9 cm, besonders bevorzugt 3 bis 8 cm, ganz besonders bevorzugt 4 bis 7 cm, insbesondere 5 bis 6 cm, aufweisen.

Das Filterelement kann eine Höhe in einem Bereich von 1 bis 14 cm, bevorzugt 2 bis 12 cm, besonders bevorzugt 3 bis 10 cm, ganz besonders bevorzugt 4 bis 8 cm, insbesondere 5 bis 6 cm, aufweisen. Die Größenskalierung des Filterelements, was mit der Reichweite des Filters korreliert, kann über die Höhe des Filterelements erfolgen, d.h. die Breite und Länge des Filterelements kann unverändert bleiben. Beim Gehäuse der Filterkapsel muss entsprechend nur die Länge der mindestens einen Seitenwand angepasst werden, was den Vorteil hat, dass der Boden und der Deckel mit allen seinen Bestandteilen unverändert bleiben kann.

Das Filterelement, bevorzugt mindestens ein Filter, mindestens ein Feinfilter und/oder mindestens ein Feinstfilter des Filterelements kann
i) Papier; und/oder
ii) Kunststoff; und/oder
iii) Metall;
enthalten oder daraus bestehen. Aus folgendem Grund ist Papier und/oder Kunststoff bevorzugt: Das Filterelement der Filterkapsel ist einem Verschleiß durch ein Verstopfen der Poren des Filterelements mit Kaffeepartikeln unterworfen, was sich durch einen langsam ansteigenden Fließdruck vor dem Filterelement bemerkbar macht. Der Verstopfungsvorgang ist nur schwer bis gar nicht reversibel. Mit anderen Worten kann das Filterelement entweder nur schwer oder gar nicht mehr rückwärts frei gespült werden und muss somit regelmäßig nach einer gewissen Anzahl von Kaffeebezügen ausgetauscht werden. Papier und/oder Kunststoff sind kostengünstiger in der Filterkapsel verbaubar und stellen somit für einen Hersteller und einen Benutzer der Filterkapsel einen ökonomischen Vorteil dar. Papier und/oder leicht biologisch abbaubarer Kunststoff sind besonders bevorzugt, da diese eine geringe Umweltbelastung darstellen und somit auch einen ökologischen Vorteil aufweisen.

Das Filterelement, bevorzugt mindestens ein Filter, mindestens ein Feinfilter und/oder mindestens ein Feinstfilter des Filterelements können im Wesentlichen in Form eines geraden oder schiefen Zylinders ausgestaltet sein. Optional weist der Zylinder eine gerade oder schiefe zylindrische Ausnehmung in der Mitte des Zylinders auf. Der Zylinder weist bevorzugt eine, optional mit einem Loch in der Mitte versehene, Grundfläche auf, die ausgewählt ist aus der Gruppe bestehend aus kreisförmige Grundfläche, halbkreisförmige Grundfläche, sichelförmige Grundfläche, elliptische Grundfläche und Grundfläche mit mindestens zwei Ecken. Eine kreisförmige Grundfläche ist besonders bevorzugt.

Das Filterelement, bevorzugt mindestens ein Filter, mindestens ein Feinfilter und/oder mindestens ein Feinstfilter des Filterelements, kann von Fluid, bevorzugt von einer wässrigen Lösung, besonders bevorzugt von Kaffee,
i) radial anströmbar sein, bevorzugt von stromaufwärts kommenden Fluid radial in Richtung zu einer Achse des Zylinders anströmbar sein und/oder von stromabwärts kommenden Fluid radial in Richtung weg von einer Achse des Zylinders anströmbar sein; und/oder
ii) axial anströmbar sein, bevorzugt von stromaufwärts kommenden Fluid in Richtung entlang einer Achse des Zylinders von einer Oberseite des Filterelements zu einer Unterseite des Filterelements anströmbar sein und/oder von stromabwärts kommenden Fluid in Richtung entlang einer Achse des Zylinders von einer Unterseite des Filterelements zu einer Oberseite des Filterelements anströmbar sein.

Die radiale Anströmung hat den Vorteil, dass das Filterelement bei einer bestimmten Siebfläche eine kleinere maximale Raumausdehnung aufweist als bei der axialen Anströmung. Ferner kann somit auf einfache Art und Weise der Fluideingang und Fluidausgang der Filterkapsel auf (nur) einer bestimmten Seite (z.B. im Deckel der Filterkapsel) realisiert werden. Es ist von Vorteil, wenn die Engmaschigkeit der eingesetzten Siebe in Strömungsrichtung zunimmt d.h. das Fluid beispielsweise erst durch einen Filter (Außenmantel des Zylinders), dann durch einen Feinfilter (Mittelmantel des Zylinders) und anschließend durch einen Feinstfilter (Innenmantel des Zylinders) strömt. Hier hat die radiale Anströmung den Vorteil, dass sie bei vergleichbarer Filtrationsqualität ökonomischer und ökologischer ist als die axiale Anströmung, da die Fläche des Feinstfilters kleiner ist als die Fläche des Feinfilters und die Fläche des Feinfilters kleiner ist als die Fläche des Filters.

Der Boden der Filterkapsel kann eine Grundfläche mit einer Länge, einer Breite und/oder einem Durchmesser aufweisen, die/der größer ist als die Länge, die Breite und/oder der Durchmesser der Grundfläche des Filterelements, bevorzugt 0,01 bis 5 mm, besonders bevorzugt 0,05 bis 4 mm, ganz besonders bevorzugt 0,1 bis 3 mm, insbesondere 0,2 bis 2 mm, größer. Optional ist die Länge, Breite und/oder der Durchmesser des Deckels größer ist als des Bodens.

Der Boden der Filterkapsel kann auf einer dem mindestens einen Filterelement zugewandten Seite mindestens eine Erhebung, bevorzugt mindestens eine kreisförmige Erhebung, aufweisen, die sich in Richtung Filterelement erstreckt, bevorzugt in Richtung eines Feinstfilters des Filterelements erstreckt, und den Raum zwischen Boden und Filterelement flüssigkeitsdicht verschließt. Die Erhebung bewirkt, dass in die Filterkapsel (durch einen Zulauf) einströmende Flüssigkeit das Filterelement passiert und schließlich die Filterkapsel (durch einen Auslauf) verlässt, also nicht am Filterelement vorbei läuft. Die Erhebung hat somit die Funktion eines Dichtelements.

Der Boden der Filterkapsel kann eine Dicke im Bereich von 0,1 bis 2 mm, bevorzugt 0,2 bis 1,5 mm, besonders bevorzugt 0,3 bis 1,0 mm, insbesondere 0,4 bis 0,5 mm, aufweisen.

Der Boden der Filterkapsel kann einen elastischen Bereich enthalten oder daraus bestehen. Bevorzugt wird die Elastizität des elastischen Bereichs durch eine bestimmte Dicke, eine bestimmte Geometrie (z.B. Faltenbalg) und/oder ein bestimmtes Material bewirkt. Das bestimmte Material ist besonders bevorzugt ausgewählt aus der Gruppe bestehend aus Elastomeren und Thermoplasten. Insbesondere ist das Material ausgewählt aus der Gruppe bestehend aus Silikon, Kautschuk, Polypropylen, Polyethylen, Polystyrol und Mischungen hiervon.

Ist der Boden zumindest bereichsweise elastisch ausgestaltet (z.B. durch ein elastisches Material oder eine geringe Dicke des Bodens) kann durch einen Überdruck im Inneren der Filterkapsel ein Auswölben des Bodens stattfinden, wobei Flüssigkeit am Filterelement vorbei fließen kann ("Bypass"). Eine Zerstörung der Filterkapsel durch Überdruck wird dadurch vermieden. Auch ein plötzliches Verstopfen des Filterelements aus irgendwelchen, nicht vorsehbaren Gründen (z.B. ein Defekt des Brühsiebes stromaufwärts der Filterkapsel) führt nicht zu einer Überdruck-bedingten Zerstörung der Filterkapsel. Es kann am Ergebnis in der Tasse erkannt werden, dass der Filter nicht mehr funktioniert, da sich in der Tasse dann klassischer druckgebrühter Kaffee befindet. Ferner kann die Wölbung des Bodens auch ein Signal in einem Drucksensor bewirken, der am Boden der Filterkapsel anliegt. Somit kann einer die Filterkapsel und den Drucksensor aufweisende Kaffeemaschine auch über diesem Weg die Information verarbeiten und ausgeben, dass ein Überdruck in der Filterkapsel herrscht und diese ausgetauscht werden muss.

Der Boden der Filterkapsel kann eine Einbuchtung aufweisen, die sich in Richtung des Deckels erstreckt, bevorzugt mindestens 25% der Höhe der mindestens einen Seitenwand, besonders bevorzugt mindestens 50% der Höhe der mindestens einen Seitenwand, ganz besonders bevorzugt mindestens 75% der Höhe der mindestens einen Seitenwand, insbesondere mindestens 90% der Höhe der mindestens einen Seitenwand.

Die Einbuchtung des Bodens kann bevorzugt in einer zylindrischen Ausnehmung des Filterelements angeordnet sein.

Die Einbuchtung des Bodens kann mindestens eine sich in Richtung der mindestens einen Seitenwand erstreckende Rippe, bevorzugt mindestens zwei sich in Richtung der mindestens einen Seitenwand erstreckende Rippen, besonders bevorzugt mindestens vier sich in Richtung der mindestens einen Seitenwand erstreckende Rippen, enthalten. Ganz besonders bevorzugt sind jeweils zwei Rippen gegenüberliegend angeordnet. Insbesondere erstrecken sich die Rippen entlang der Einbuchtung des Bodens in Richtung Deckel, optional auf einer Länge, die mindestens 50% der Länge der mindestens einen Seitenwand beträgt. Die Rippe bzw. mehreren Rippen haben den Vorteil, dass das Filterelement in der Filterkapsel bzw. in dem Gehäuse der Filterkapsel ausgerichtet, fixiert und/oder zentriert wird.

Die Einbuchtung des Bodens kann eine Grundflächennut enthalten, die bevorzugt in einer parallel zum Deckel angeordneten Grundfläche der Einbuchtung angeordnet ist, besonders bevorzugt konzentrisch um eine Mittelachse einer Grundfläche des Deckels angeordnet ist. Die Grundflächennut kann dazu dienen, eine Ausbuchtung einer zur Aufnahme der Filterkapsel vorgesehene Adapterkapsel aufzunehmen und somit die Filterkapsel in der Adapterkapsel zu fixieren und/oder zentrieren.

Die Einbuchtung des Bodens kann eine Seitenflächennut enthalten, die bevorzugt in einer im Wesentlichen senkrecht zum Deckel angeordneten Seitenfläche der Einbuchtung angeordnet ist, besonders bevorzugt konzentrisch um eine Mittelachse einer Grundfläche des Deckels angeordnet ist. Die Seitenflächennut kann dazu dienen, eine Ausbuchtung einer zur Aufnahme der Filterkapsel vorgesehene Adapterkapsel aufzunehmen und somit die Filterkapsel in der Adapterkapsel zu fixieren und/oder zentrieren.

Die mindestens eine Seitenwand der Filterkapsel kann eine Höhe aufweisen, die größer ist als die Höhe des Filterelements bevorzugt 0,01 bis 5 mm, besonders bevorzugt 0,05 bis 4 mm, ganz besonders bevorzugt 0,1 bis 3 mm, insbesondere 0,2 bis 2 mm, größer.

Die mindestens eine Seitenwand der Filterkapsel kann reversibel mit dem Deckel verbunden sein, bevorzugt über eine formschlüssige und/oder kraftschlüssige Verbindung, besonders bevorzugt über eine Schraubverbindung oder Klemmverbindung (Mehrweglösung). Der Vorteil an dieser Ausgestaltungsform ist, dass die Filterkapsel vom Benutzer geöffnet und verschlossen werden kann, um das Filterelement auszutauschen.

Die mindestens eine Seitenwand der Filterkapsel kann irreversibel mit dem Deckel verbunden sein, bevorzugt über eine stoffschlüssige Verbindung, besonders bevorzugt über eine Schweißverbindung oder Klebeverbindung (Einweglösung). Der Vorteil an dieser Ausgestaltungsform ist, dass im Gegensatz zur Mehrweglösung keine Probleme mit der Dichtigkeit der Filterkapsel an der Schnittstelle zwischen dem Deckel und der mindestens einen Seitenwand auftreten können.

Die mindestens eine Seitenwand der Filterkapsel kann eine Dicke im Bereich von 0,1 bis 2 mm, bevorzugt 0,2 bis 1,5 mm, besonders bevorzugt 0,3 bis 1,0 mm, insbesondere 0,4 bis 0,5 mm, aufweisen.

Die Seitenwand kann mindestens eine sich in Richtung des Filterelements erstreckende Rippe, bevorzugt mindestens zwei sich in Richtung des Filterelements erstreckende Rippen, besonders bevorzugt mindestens vier sich in Richtung des Filterelements erstreckende Rippen, enthalten. Ganz besonders bevorzugt sind jeweils zwei Rippen gegenüberliegend angeordnet. Insbesondere erstrecken sich die Rippen entlang der mindestens einen Seitenwand in Richtung Deckel, optional auf einer Länge, die mindestens 50% der Länge der mindestens einen Seitenwand beträgt. Die Rippe bzw. mehreren Rippen haben den Vorteil, dass das Filterelement in der Filterkapsel bzw. in dem Gehäuse der Filterkapsel ausgerichtet, fixiert und/oder zentriert wird.

Die mindestens eine Seitenwand der Filterkapsel kann einen elastischen Bereich enthalten oder daraus bestehen. Bevorzugt wird die Elastizität des elastischen Bereichs durch eine bestimmte Dicke, eine bestimmte Geometrie (z.B. Faltenbalg) und/oder ein bestimmtes Material bewirkt. Das bestimmte Material ist besonders bevorzugt ausgewählt aus der Gruppe bestehend aus Elastomeren und Thermoplasten. Insbesondere ist das Material ausgewählt aus der Gruppe bestehend aus Silikon, Kautschuk, Polypropylen, Polyethylen, Polystyrol und Mischungen hiervon.

Ist die mindestens eine Seitenwand zumindest bereichsweise elastisch ausgestaltet (z.B. durch ein elastisches Material oder eine geringe Dicke des Bodens) kann durch einen Überdruck im Inneren der Filterkapsel ein Auswölben des der mindestens einen Seitenwand stattfinden. Dieses Auswölben kann ein Signal in einem Drucksensor bewirken, der an der mindestens einen Seitenwand der Filterkapsel anliegt. Somit kann eine die Filterkapsel und den Drucksensor aufweisende Kaffeemaschine die Information verarbeiten und ausgeausgeben, dass ein Überdruck in der Filterkapsel herrscht und diese ausgetauscht werden muss.

Der Deckel der Filterkapsel kann eine Grundfläche mit einer Länge, einer Breite und/oder einem Durchmesser aufweisen, die/der größer ist als die Länge, die Breite und/oder der Durchmesser der Grundfläche des Filterelements, bevorzugt 0,01 bis 5 mm, besonders bevorzugt 0,05 bis 4 mm, ganz besonders bevorzugt 0,1 bis 3 mm, insbesondere 0,2 bis 2 mm, größer, Optional ist die Länge, Breite und/oder der Durchmesser des Deckels größer ist als die Länge, Breite und/oder der Durchmesser des Bodens.

Der Deckel der Filterkapsel weist mindestens einen durchgehenden Fluideinlass auf (Einlass von Flüssigkeit von Zulauf einer Kaffeemaschine), der benachbart zu einer Mittelachse einer Grundfläche des Deckels angeordnet ist und besonders bevorzugt eine Membran zur Vermeidung von Abtropfen von Flüssigkeit aus der Filterkapsel enthält. Dies bewirkt, dass die Filterkapsel einen zentralen bzw. koaxialen Einlassanschluss an eine Kaffeemaschine aufweist, der ein richtungsunabhängiges Einsetzen des Filters ermöglicht.

Der Deckel der Filterkapsel weist mindestens einen durchgehenden Fluidauslass auf (Auslass von Flüssigkeit zu Ablauf einer Kaffeemaschine), der bevorzugt entlang einer Mittelachse einer Grundfläche des Deckels angeordnet ist und besonders bevorzugt eine Membran zur Vermeidung von Abtropfen von Flüssigkeit aus der Filterkapsel enthält. Dies bewirkt, dass die Filterkapsel einen zentralen bzw. koaxialen Auslassanschluss an eine Kaffeemaschine aufweist, der ein richtungsunabhängiges Einsetzen des Filters ermöglicht.

Der Deckel der Filterkapsel kann auf einer dem mindestens einen Filterelement abgewandten Seite mindestens einen, bevorzugt mindestens zwei, besonders bevorzugt mindestens vier, insbesondere mindestens acht, Abstandshalter aufweisen, die optional monolithisch mit dem Deckel sind. Der bzw. die Abstandshalter verbessern die Stabilität der fluidischen Anbindung der Filterkapsel an einen Ablauf zu einer Kaffeemaschine.

Der Deckel der Filterkapsel kann auf einer dem mindestens einen Filterelement zugewandten Seite mindestens einen, bevorzugt mindestens zwei, besonders bevorzugt mindestens drei, insbesondere mindestens vier, Fluidkanäle aufweisen, die sich bevorzugt von einer Mitte einer Grundfläche des Deckels in Richtung mindestens einer Seitenwand der Filterkapsel erstrecken und besonders bevorzugt zu einer dem Deckel zugewandten Seite des Filterelements, optional über eine Fluidkanalscheibe, geschlossen sind. Die Anwesenheit mehrere Fluidkanäle hat den Vorteil, dass eine definiertere Flüssigkeitsströmung und eine gleichmäßigere Verteilung des Kaffeestroms zum Filterelement erzeugt wird. Durch diese Maßnahme kann die volle Kapazität des Filterelements genutzt werden und die Lebensdauer des Filters verlängert werden.

Der Deckel der Filterkapsel kann eine Sollbruchstelle aufweisen, bevorzugt eine Membran, die dazu geeignet ist, im Falle eines Überdrucks den Fluidstrom in der Filterkapsel an dem Filterelement vorbei zu lenken. Vorteil an dieser Ausgestaltungsform ist, dass im Falle eines (massiven) Überdrucks Flüssigkeit nicht über das Filterelement durch die Filterkapsel geleitet wird ("Bypass") und somit eine druckbedingte Zerstörung der Filterkapsel vermieden wird.

Der Deckel der Filterkapsel kann eine Dichtungsfolie aufweisen, die einen Fluideinlass und/oder Fluidauslass des Deckels fluiddicht verschließt. Vorteil hierbei ist, dass beim Entfernen der Filterkapsel aus einer Kaffeemaschine kein Auslaufen von Flüssigkeit (Kaffee) aus der Filterkapsel stattfindet.

Der Deckel der Filterkapsel kann auf einer dem mindestens einen Filterelement zugewandten Seite mindestens eine Erhebung, bevorzugt mindestens eine kreisförmige Erhebung, aufweisen, die sich in Richtung Filterelement erstreckt, bevorzugt in Richtung eines Feinstfilters des Filterelements erstreckt, und den Raum zwischen Deckel und Filterelement flüssigkeitsdicht verschließt. Die Erhebung bewirkt, dass in die Filterkapsel (durch einen Zulauf) einströmende Flüssigkeit das Filterelement passiert und schließlich die Filterkapsel (durch einen Auslauf) verlässt, also nicht am Filterelement vorbei läuft. Die Erhebung hat somit die Funktion eines Dichtelements.

Ferner kann der Deckel der Filterkapsel eine Abdichtungsfolie enthalten. Mit der Abdichtungsfolie kann ein Fluideinlass und Fluidauslass des Deckels reversibel verschlossen werden, was die Langzeitbeständigkeit der Filterkapsel während ihrer Lagerung bis zum Gebrauch erhöht und die Filterkapsel hygienischer macht. Die Filterelemente können beispielsweise geblistert bereitgestellt werden.

Die Filterkapsel kann eine Fluidkanalscheibe enthalten, die zwischen dem Deckel und einer dem Deckel zugwandten Seite des Filterelements angeordnet ist.

Die Fluidkanalscheibe kann eine durchgehende Ausnehmung aufweisen, wobei die durchgehende Ausnehmung bevorzugt im Wesentlichen in der Mitte einer Grundfläche der Fluidkanalscheibe angeordnet ist.

Insbesondere enthält die Fluidkanalscheibe zumindest bereichsweise und zumindest Teile eines Fluidkanals. Mit anderen Worten kann mindestens ein Fluidkanal oder mehrere Fluidkanäle nicht nur bzw. gar nicht im Deckel realisiert sein, sondern auf oder in der Fluidkanalscheibe, die zwischen Deckel und Filterelement angeordnet ist.

Die Fluidkanalscheibe kann auf einer dem mindestens einen Filterelement zugewandten Seite mindestens einen, bevorzugt mindestens zwei, besonders bevorzugt mindestens drei, insbesondere mindestens vier, Fluidkanäle aufweisen, die sich bevorzugt von einer Mitte einer Grundfläche der Fluidkanalscheibe in Richtung mindestens einer Seitenwand der Filterkapsel erstrecken und besonders bevorzugt zu einer dem Deckel zugewandten Seite des Filterelements, optional über eine Fluidkanalscheibe, geschlossen sind.

Die Fluidkanalscheibe kann auf einer dem mindestens einen Filterelement zugewandten Seite mindestens eine Erhebung, bevorzugt mindestens eine kreisförmige Erhebung, aufweisen, die sich in Richtung Filterelement erstreckt, bevorzugt in Richtung eines Feinstfilters des Filterelements erstreckt, und den Raum zwischen Fluidkanalscheibe und Filterelement flüssigkeitsdicht verschließt. Die Erhebung bewirkt, dass in die Filterkapsel (durch einen Zulauf) einströmende Flüssigkeit das Filterelement passiert und schließlich die Filterkapsel (durch einen Auslauf) verlässt, also nicht am Filterelement vorbei läuft. Die Erhebung hat somit die Funktion eines Dichtelements.

Die Fluidkanalscheibe kann eine Sollbruchstelle aufweisen, bevorzugt eine Membran, die dazu geeignet ist, im Falle eines Überdrucks den Fluidstrom in der Filterkapsel an dem Filterelement vorbei zu lenken. Vorteil an dieser Ausgestaltungsform ist, dass im Falle eines (massiven) Überdrucks Flüssigkeit nicht über das Filterelement durch die Filterkapsel geleitet wird ("Bypass") und somit eine druckbedingte Zerstörung der Filterkapsel vermieden wird.

Die Fluidkanalscheibe kann parallel zur einer Grundfläche des Deckels angeordnet sein.

Die Filterkapsel kann mindestens eine Fluidleitung enthalten, die in einem Bereich benachbart zu einer Mittelachse durch eine Grundfläche des Deckels durch den Deckel in die Filterkapsel eintritt, sich auf einer dem Filterelement zugewandten Seite des Deckels in Richtung der mindestens einen Seitenwand erstreckt, sich bevorzugt entlang der mindestens einen Seitenwand erstreckt, sich besonders bevorzugt durch das mindestens eine Filterelement erstreckt, sich ganz besonders bevorzugt in einen Bereich in der Mitte der Filterkapsel erstreckt und insbesondere entlang der Mittelachse durch die Grundfläche des Deckels durch den Deckel aus der Filterkapsel austritt.

Die Filterkapsel kann ein Fangsieb enthalten, das stromabwärts des mindestens einen Filterelements angeordnet ist, bevorzugt im Deckel integriert ist oder zwischen dem Filterelement und dem Deckel (z.B. im Auslaufbereich der Filterkapsel), angeordnet ist, und besonders bevorzugt eine Porengröße im Bereich von 50 bis 500 µm aufweist, ganz besonders bevorzugt eine Dicke von 0,1 mm bis 10 mm aufweist. Insbesondere ist das Fangsieb parallel zu einer Grundfläche des Deckels angeordnet. Das Fangsieb bewirkt, dass makroskopische Partikel und Fasern des Filterelements, die sich während dem Betrieb der Filterkapsel von dem Filterelement lösen können, angefangen und zurückgehalten werden.

Die Filterkapsel kann mit einer Adapterkapsel verbunden sein. Die Adapterkapsel ist bevorzugt dazu geeignet ist, mit einer Halterung einer Kaffeemaschine verbunden zu werden, bevorzugt über eine reversible Verbindung, besonders bevorzugt über einen Schraubverschluss, Klappverschluss und/oder Bajonettverschluss.

Die Adapterkapsel kann mindestens einen Magneten enthalten, wobei der mindestens eine Magnet bevorzugt dazu geeignet ist zu detektieren, ob die Adapterkapsel mit einer Filterkapsel verbunden ist.

Die Adapterkapsel kann mindestens ein über ein Federelement gelagertes Fixierelement enthalten, wobei das Fixierelement bevorzugt dazu geeignet ist, die Filterkapsel gegen eine Halterung einer Kaffeemaschine zu pressen, insbesondere über Ausübung von Druck auf eine Einbuchtung im Boden des Gehäuses des Filterelements.

Das Fixierelement kann zudem dazu geeignet sein, in Abwesenheit einer Filterkapsel zwischen einem Zulauf und einem Ablauf der Kaffeemaschine eine fluidische Verbindung herzustellen. Diese Eignung hat den Vorteil, dass eine Reinigungsprozedur der Kaffeemaschine vereinfacht wird, da der Zulauf und der Ablauf der Kaffeemaschine zur Filterkapsel kurzgeschlossen wird und somit unproblematisch gespült werden kann.

Die Adapterkapsel kann mindestens eine Grundflächenausbuchtung enthalten, die bevorzugt dazu geeignet ist, in eine Grundflächennut einer Einbuchtung des Bodens des Gehäuses einzurasten.

Die Adapterkapsel kann mindestens eine Seitenflächenausbuchtung enthalten, die bevorzugt dazu geeignet ist, in einer Seitenflächennut einer Einbuchtung des Bodens des Gehäuses einzurasten.

Es wird ferner die Verwendung der erfindungsgemäßen Filterkapsel zur Nachfiltration von Kaffee vorgeschlagen.

Anhand der nachfolgenden Figuren soll der erfindungsgemäße Gegenstand näher erläutert werden, ohne diesen auf die hier dargestellten spezifischen Ausgestaltungsformen einschränken zu wollen.

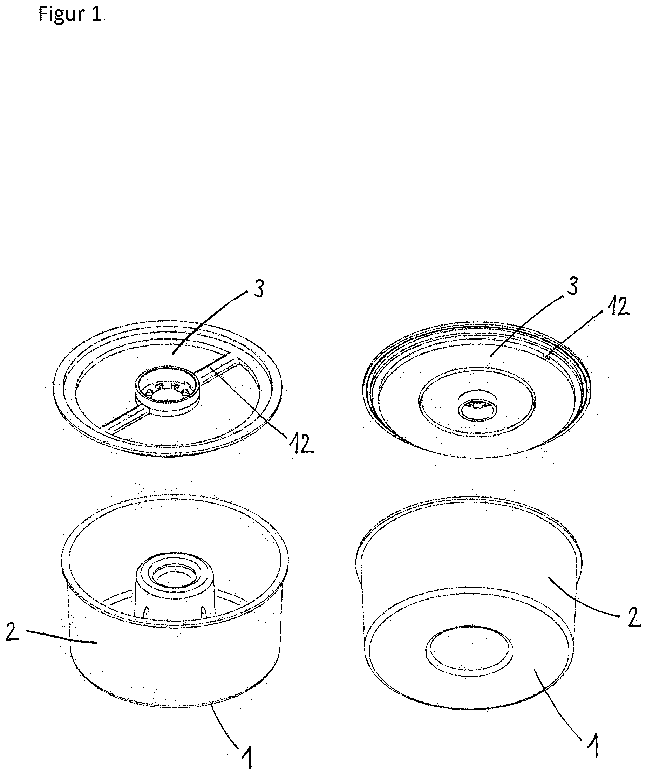

Figur 1 zeigt Teile eines Gehäuses einer erfindungsgemäßen Filterkapsel. Am Rand des Bodens 1 des Gehäuses erstreckt sich eine Seitenwand 2, die in diesem Fall eine Zylinder-ähnliche Form aufweist. An der Seitenwand 2 wird der Deckel 3 reversibel oder irreversibel befestigt. In dieser Ausgestaltungsform weist der Deckel mindestens einen Fluidkanal 12 auf.

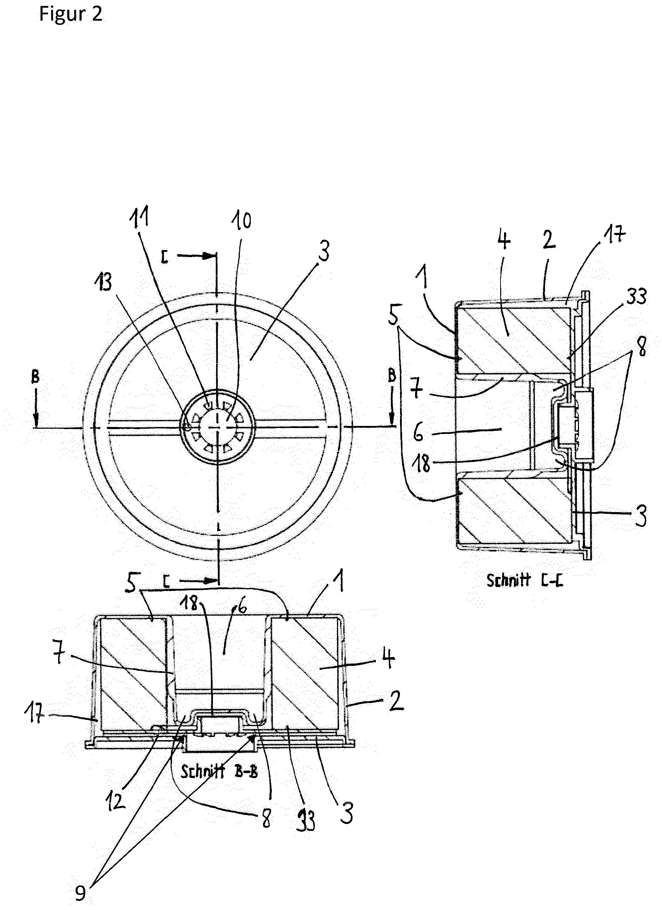

Figur 2 zeigt verschiedene Ansichten auf eine erfindungsgemäße Filterkapsel. Der Boden 1 ist monolithisch zur Seitenwand 2 und die Seitenwand 2 irreversibel mit dem Deckel 3 verbunden. In dem aus Boden 1, Seitenwand 2 und Deckel 3 ausgebildeten Gehäuse ist das Filterelement 4 angeordnet. Eine kreisförmige Erhebung 5 am Boden 1 und eine kreisförmige Erhebung 33 am Deckel 3 verhindert, dass Flüssigkeit in der Filterkapsel am Filterelement 4 vorbei strömen kann. Der Boden 1 weist eine Einbuchtung 6 auf, die eine Ausbuchtung 7 in Richtung des Filterelements 4 und eine Grundflächennut 8 aufweist. Dargestellt ist zudem ein im Deckel 3 befindlicher Fluideinlass 9 mit Überdrucksicherung, Fluidauslass 10 und Fluidkanal 12. Zudem ist ein Fluidkanal 17 der Filterkapsel dargestellt, der sich entlang der Seitenwand 2 erstreckt. Diese Filterkapsel enthält ferner einen Fangsieb 18, um makroskopische Partikel und Fasern des Filterelements 4 aufzufangen und zurück zu halten. Zudem weist die Filterkapsel eine Sollbruchstelle 13 im Deckel (hier: eine Membran) auf, welche bei Überdruck bricht. Flüssigkeit kann somit am Filterelement 4 vorbei direkt vom Einlass zum Auslass der Filterkapsel strömen ("Bypass"). Folglich kann eine mögliche Zerstörung der Filterkapsel durch Überdruck vermieden werden.

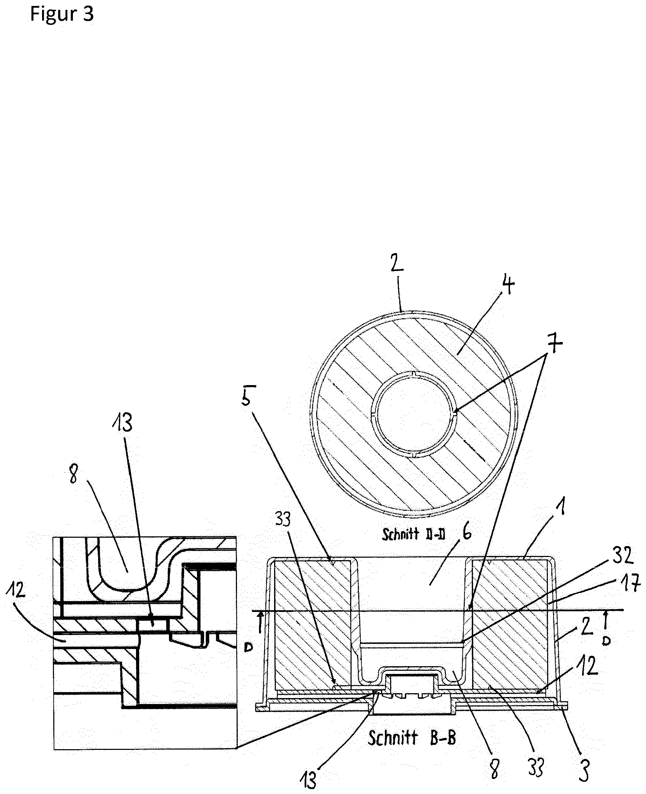

Figur 3 zeigt weitere verschiedene Ansichten auf eine erfindungsgemäße Filterkapsel. Der Boden 1 ist auch hier monolithisch mit der Seitenwand 2 und die Seitenwand 2 irreversibel mit dem Deckel 3 verbunden. In dem aus Boden 1, Seitenwand 2 und Deckel 3 ausgebildeten Gehäuse ist das Filterelement 4 angeordnet. Eine kreisförmige Erhebung 5 am Boden 1 und eine kreisförmige Erhebung 33 am Deckel 3 verhindert, dass Flüssigkeit in der Filterkapsel am Filterelement 4 vorbei strömen kann. Der Boden 1 weist eine Einbuchtung 6 auf, die eine Ausbuchtung 7 in Richtung des Filterelements 4 und eine Grundflächennut 8 aufweist. Dargestellt ist zudem ein im Deckel 3 befindlicher Fluidkanal 12. Zudem ist ein Fluidkanal 17 der Filterkapsel dargestellt, der sich entlang der Seitenwand 2 erstreckt. Darüberhinaus ist die Anordnung einer Seitenflächennut 32 der Einbuchtung 6 des Bodens 1 des Gehäuses hervorgehoben, welche die Anbindung einer Adapterkapsel an die Filterkapsel erleichtert. Diese Filterkapsel enthält ferner eine Sollbruchstelle 13 im Deckel (hier: eine Membran), welche bei Überdruck bricht und Flüssigkeit nicht über das Filterelement 4 passieren lässt, sondern Einlass und Auslass kurzschließt ("Bypass"). Folglich kann eine mögliche Zerstörung der Filterkapsel durch Überdruck vermieden werden.

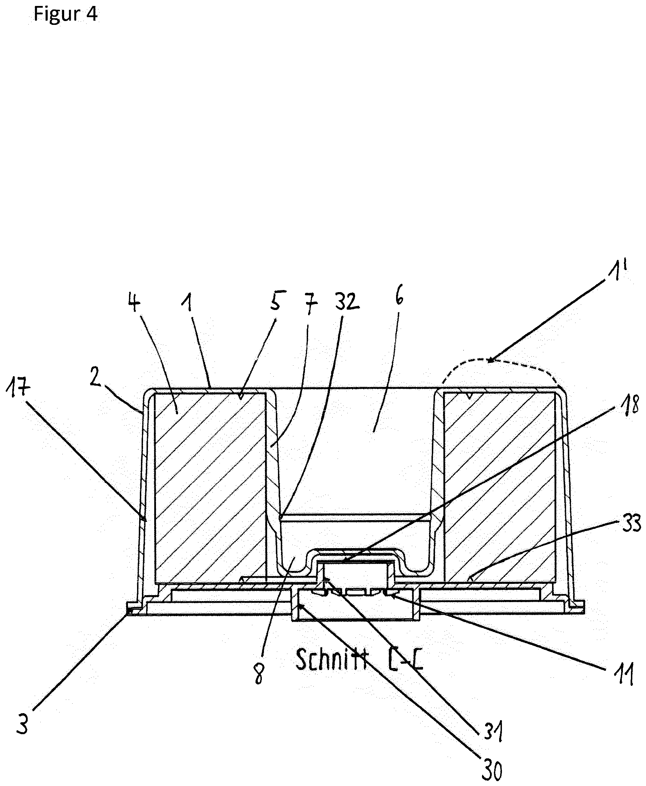

Figur 4 zeigt einen Querschnitt einer erfindungsgemäßen Filterkapsel. Der Boden 1 ist auch hier monolithisch mit der Seitenwand 2 und die Seitenwand 2 irreversibel mit dem Deckel 3 verbunden. In dem aus Boden 1, Seitenwand 2 und Deckel 3 ausgebildeten Gehäuse ist das Filterelement 4 angeordnet. Eine kreisförmige Erhebung 5 am Boden 1 und eine kreisförmige Erhebung 33 am Deckel 3 verhindert, dass Flüssigkeit in der Filterkapsel am Filterelement 4 vorbei strömen kann. Der Boden 1 weist eine Einbuchtung 6 auf, die eine Ausbuchtung 7 in Richtung des Filterelements 4 und eine Grundflächennut 8 aufweist. Zudem ist ein Fluidkanal 17 der Filterkapsel dargestellt, der sich entlang der Seitenwand 2 erstreckt. Darüberhinaus ist die Anordnung einer Seitenflächennut 32 der Einbuchtung 6 des Bodens 1 des Gehäuses hervorgehoben, welche die Anbindung einer Adapterkapsel an die Filterkapsel erleichtert. Dargestellt ist hier zudem ein Fangsieb 18, um makroskopische Partikel und Fasern des Filterelements 4 aufzufangen und zurück zu halten und eine in dem Deckel 3 befindliche Dichtfläche 30 für die Zuleitung von Flüssigkeit und eine in dem Deckel 3 befindliche Dichtfläche 31 für die Ableitung von Flüssigkeit. Der Boden 1 weist hier einen Bodenbereich 1' auf, der elastisch ausgebildet ist (elastisches Material oder geringe Dicke). Dies hat den Vorteil, dass im Falle eines Überdrucks in der Filterkapsel Flüssigkeit nicht durch die Abdichtung der kreisförmigen Erhebung 5 am Boden 1 des Gehäuses zurückgehalten wird. Vielmehr kann unter diesen Bedingungen Flüssigkeit am Filterelement 4 vorbei strömen ("Bypass") und eine druckbedingte Beschädigung der Filterkapsel vermieden werden.

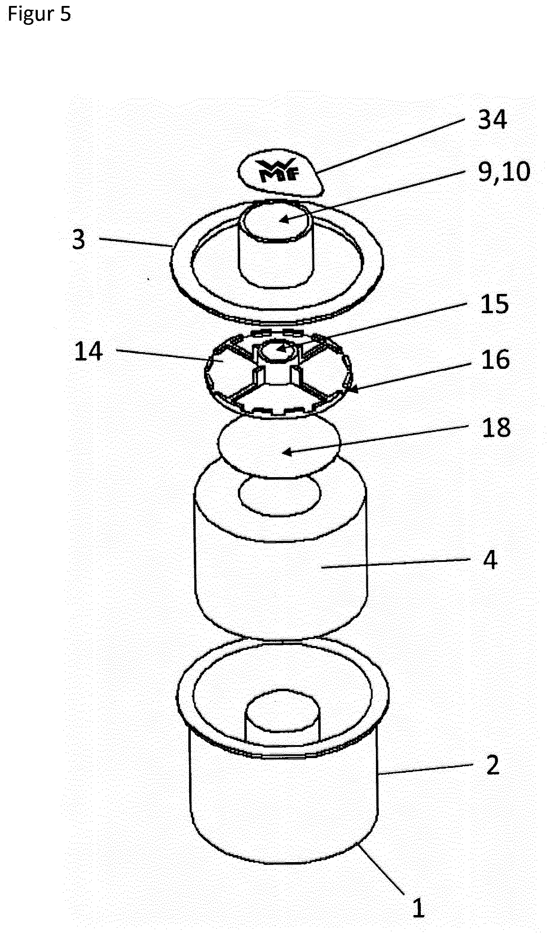

Figur 5 zeigt schematisch den Aufbau eines erfindungsgemäßen Filterelements. Der Boden 1 ist auch hier monolithisch mit der Seitenwand 2. In das monolithische Stück aus Boden 1 und Seitenwand 2 wird ein Filterelement 4 eingesetzt. Hier wird auf das Filterelement 4 ein Fangsieb 18 aufgesetzt, um während dem Betrieb der Filterkapsel makroskopische Partikel und Fasern des Filterelements 4 aufzufangen und zurück zu halten. Auf das Fangsieb 18 wird eine Fluidkanalscheibe 14 aufgesetzt, die in ihrer Mitte eine durchgehende Ausnehmung 15 aufweist und mindestens einen Fluidkanal 16 enthält. Auf diese Fluidkanalscheibe 14 wird der Deckel 3 aufgesetzt, der reversibel oder irreversibel mit der Seitenwand 2 verbunden werden kann, um das Gehäuse zu schließen. Der Deckel 3 weist einen Fluideinlass 9 und einen Fluidauslass 10 auf, der optional über eine Abdichtungsfolie 34 verschlossen werden kann, um die Langzeitstabilität der Filterkapsel während ihrer Lagerung zu erhöhen.

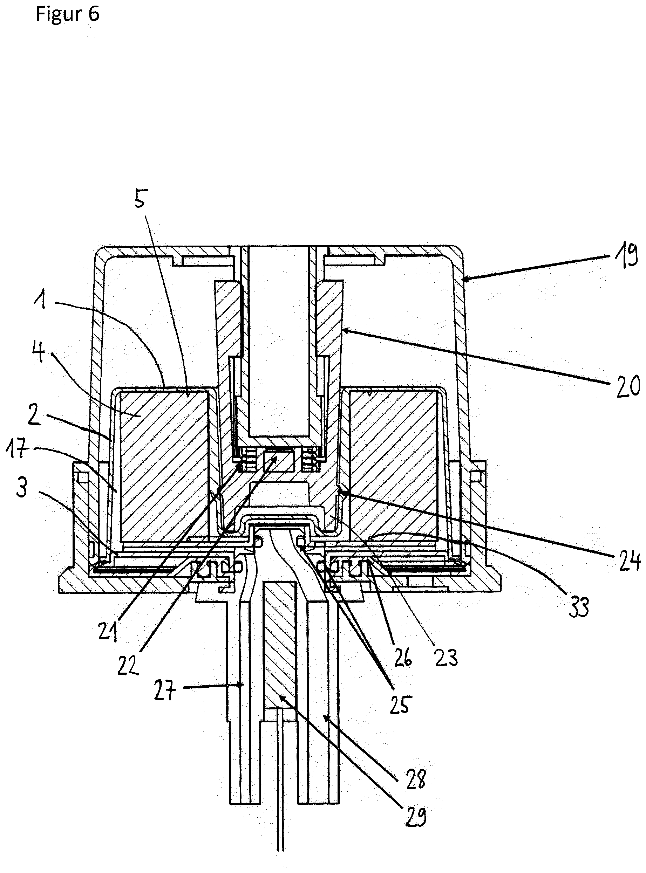

Figur 6 zeigt einen Querschnitt einer erfindungsgemäßen Filterkapsel, die in eine Adapterkapsel 19 eingesetzt ist. Der Boden 1 der Filterkapsel ist monolithisch mit der Seitenwand 2 und die Seitenwand 2 ist irreversibel mit dem Deckel 3 verbunden. In dem aus Boden 1, Seitenwand 2 und Deckel 3 ausgebildeten Gehäuse ist das Filterelement 4 angeordnet. Eine kreisförmige Erhebung 5 am Boden 1 und eine kreisförmige Erhebung 33 am Deckel 3 verhindert, dass Flüssigkeit in der Filterkapsel am Filterelement 4 vorbei strömen kann. In einer Einbuchtung am Boden 1 der Filterkapsel ist ein Fixierelement 20 der Adapterkapsel 19 angeordnet, wobei das Fixierelement 20 über eine Seitenflächenausbuchtung 24 der Adapterkapsel 19 in eine Seitenflächennut der Einbuchtung am Boden 1 der Filterkapsel formschlüssig mit der Filterkapsel verbunden ist. Ein Federelement 21 der Adapterkapsel 19 übt einen Federdruck auf die Filterkapsel aus und presst diese gegen einen Zulauf 27 und einen Ablauf 28 einer Kaffeemaschine. Eine Dichtungsring 25 und eine Silikon-Dichtung 26 der Adapterkapsel 19 stellen sicher, dass keine Flüssigkeit an der Filterkapsel vorbei läuft. Die Adapterkapsel 19 weist zudem einen Magnet 22 auf, mit dem detektiert werden kann, ob eine Filterkapsel in die Adapterkapsel 19 eingelegt ist oder nicht. Die Detektion kann beispielsweise über einen Sensor 29 der Kaffeemaschine erfolgen.

### Bezugszeichenliste

- 1:: Boden des Gehäuses
- 1':: elastischer Boden des Gehäuses unter hohem Druck in Filterkapsel (z.B. 0,7 bis 1,0 bar in Filterkapsel)
- 2:: Seitenwand des Gehäuses
- 3:: Deckel des Gehäuses
- 4:: Filterelement
- 5:: kreisförmige Erhebung am Boden des Gehäuses
- 6:: Einbuchtung im Boden des Gehäuses
- 7:: Ausbuchtung der Einbuchtung im Boden des Gehäuses
- 8:: Grundflächennut der Einbuchtung im Boden des Gehäuses
- 9:: Fluideinlass im Deckel
- 10:: Fluidauslass im Deckel
- 11:: Abstandshalter im Deckel
- 12:: Fluidkanal im Deckel
- 13:: Sollbruchstelle im Deckel
- 14:: Fluidkanalscheibe zwischen Deckel und Filterelement
- 15:: durchgehende Ausnehmung der Fluidkanalscheibe
- 16:: Fluidkanal der Fluidkanalscheibe
- 17:: Fluidkanal der Filterkapsel
- 18:: Fangsieb der Filterkapsel
- 19:: Adapterkapsel
- 20:: Fixierelement der Adapterkapsel
- 21:: Federelement der Adapterkapsel
- 22:: Magnet der Adapterkapsel
- 23:: Grundflächenausbuchtung der Adapterkapsel
- 24:: Seitenflächenausbuchtung der Adapterkapsel
- 25:: Dichtungsring der Adapterkapsel (O-Ring)
- 26:: Silikon-Dichtung
- 27:: Zulauf der Kaffeemaschine
- 28:: Ablauf der Kaffeemaschine
- 29:: Sensor der Kaffeemaschine
- 30:: Dichtfläche in Deckel für Zuleitung
- 31:: Dichtfläche in Deckel für Ableitung
- 32:: Seitenflächennut der Einbuchtung im Boden des Gehäuses
- 33:: kreisförmige Erhebung am Deckel
- 34:: Abdichtungsfolie auf Deckel

## Patentansprüche

1. Filterkapsel zur Nachfiltration von extrahiertem Kaffee, wobei die Filterkapsel ein Gehäuse und mindestens ein Filterelement (4) enthält oder daraus besteht, wobei das Gehäuse einen Boden (1, 1'), mindestens eine Seitenwand (2) und mindestens einen Deckel (3) enthält oder daraus besteht und das mindestens eine Filterelement (4) in einem Innenraum des Gehäuses angeordnet ist, **dadurch gekennzeichnet, dass** der Deckel (3) mindestens einen durchgehenden Fluideinlass (9) aufweist, der benachbart zu einer Mittelachse einer Grundfläche des Deckels (3) angeordnet ist, und
der Deckel (3) mindestens einen durchgehenden Fluidauslass (10) aufweist.

2. Filterkapsel gemäß Anspruch 1, **dadurch gekennzeichnet, dass** das Filterelement (4)
i) mindestens einen Filter, der eine maximale Porengröße von 80 µm aufweist und bevorzugt eine Dicke von 0,1 mm bis 10 mm aufweist; und/oder
ii) mindestens einen Feinfilter enthält, der bevorzugt eine maximale Porengröße von 25 µm aufweist und besonders bevorzugt eine Dicke von 0,1 mm bis 10 mm aufweist; und/oder
iii) mindestens einen Feinstfilter enthält, der bevorzugt eine maximale Porengröße von 10 µm aufweist und besonders bevorzugt eine Dicke von 0,1 mm bis 10 mm aufweist;
enthält oder daraus besteht, wobei das Filterelement (4) bevorzugt mindestens einen Filter, mindestens einen Feinfilter und mindestens einen Feinstfilter enthält oder daraus besteht und besonders bevorzugt der mindestens eine Feinfilter stromabwärts des Filters und der mindestens eine Feinstfilter stromabwärts des Feinfilters angeordnet ist

3. Filterkapsel gemäß einem der vorhergehenden Ansprüche, **dadurch gekennzeichnet, dass** das Filterelement (4)
i) eine Länge, eine Breite und/oder einen Durchmesser im Bereich von 1 bis 10 cm, bevorzugt 2 bis 9 cm, besonders bevorzugt 3 bis 8 cm, ganz besonders bevorzugt 4 bis 7 cm, insbesondere 5 bis 6 cm, aufweist; und/oder
ii) eine Höhe in einem Bereich von 1 bis 14 cm, bevorzugt 2 bis 12 cm, besonders bevorzugt 3 bis 10 cm, ganz besonders bevorzugt 4 bis 8 cm, insbesondere 5 bis 6 cm, aufweist.

4. Filterkapsel gemäß einem der vorhergehenden Ansprüche, **dadurch gekennzeichnet, dass** das Filterelement (4), bevorzugt mindestens ein Filter, Feinfilter und/oder Feinstfilter des Filterelements (4),
i) Papier; und/oder
ii) Kunststoff; und/oder
iii) Metall;
enthält oder daraus besteht

5. Filterkapsel gemäß einem der vorhergehenden Ansprüche, **dadurch gekennzeichnet, dass** das Filterelement (4), bevorzugt mindestens ein Filter, Feinfilter und/oder Feinstfilter des Filterelements (4), im Wesentlichen in Form eines geraden oder schiefen Zylinders, optional mit einer geraden oder schiefen zylindrischen Ausnehmung in der Mitte des Zylinders, ausgestaltet ist, wobei der Zylinder bevorzugt eine, optional mit einem Loch in der Mitte versehene, Grundfläche aufweist, die ausgewählt ist aus der Gruppe bestehend aus kreisförmige Grundfläche, halbkreisförmige Grundfläche, sichelförmige Grundfläche, elliptische Grundfläche und Grundfläche mit mindestens zwei Ecken, wobei eine kreisförmige Grundfläche besonders bevorzugt ist.

6. Filterkapsel gemäß einem der vorhergehenden Ansprüche, **dadurch gekennzeichnet, dass** das Filterelement (4), bevorzugt mindestens ein Filter, Feinfilter und/oder Feinstfilter des Filterelements (4), von Fluid, bevorzugt einer wässrigen Lösung, besonders bevorzugt Kaffee,
i) radial anströmbar ist, bevorzugt von stromaufwärts kommenden Fluid radial in Richtung zu einer Achse des Zylinders anströmbar ist und/oder von stromabwärts kommenden Fluid radial in Richtung weg von einer Achse des Zylinders anströmbar ist; und/oder
ii) axial anströmbar ist, bevorzugt von stromaufwärts kommenden Fluid in Richtung entlang einer Achse des Zylinders von einer Oberseite des Filterelements (4) zu einer Unterseite des Filterelements (4) anströmbar ist und/oder von stromabwärts kommenden Fluid in Richtung entlang einer Achse des Zylinders von einer Unterseite des Filterelements (4) zu einer Oberseite des Filterelements (4) anströmbar ist.

7. Filterkapsel gemäß einem der vorhergehenden Ansprüche, **dadurch gekennzeichnet, dass** der Boden (1, 1')
i) eine Grundfläche mit einer Länge, einer Breite und/oder einem Durchmesser aufweist, die/der größer ist als die Länge, die Breite und/oder der Durchmesser der Grundfläche des Filterelements (4), bevorzugt 0,01 bis 5 mm, besonders bevorzugt 0,05 bis 4 mm, ganz besonders bevorzugt 0,1 bis 3 mm, insbesondere 0,2 bis 2 mm, größer, wobei optional die Länge, Breite und/oder der Durchmesser des Deckels (3) größer ist als des Bodens (1, 1'); und/oder
ii) auf einer dem mindestens einen Filterelement (4) zugewandten Seite mindestens eine Erhebung, bevorzugt mindestens eine kreisförmige Erhebung (5), aufweist, die sich in Richtung Filterelement (4) erstreckt, bevorzugt in Richtung eines Feinstfilters des Filterelements (4) erstreckt, und den Raum zwischen Boden (1, 1') und Filterelement (4) flüssigkeitsdicht verschließt; und/oder
iii) eine Dicke im Bereich von 0,1 bis 2 mm, bevorzugt 0,2 bis 1,5 mm, besonders bevorzugt 0,3 bis 1,0 mm, insbesondere 0,4 bis 0,5 mm, aufweist; und/oder
iv) einen elastischen Bereich enthält oder daraus besteht, bevorzugt einen elastischen Bereich, dessen Elastizität durch eine bestimmte Dicke, eine bestimmte Geometrie und/oder ein bestimmtes Material bewirkt wird.

8. Filterkapsel gemäß einem der vorhergehenden Ansprüche, **dadurch gekennzeichnet, dass** der Boden (1, 1') eine Einbuchtung (6) aufweist, die sich in Richtung des Deckels (3) erstreckt, bevorzugt mindestens 25% der Höhe der mindestens einen Seitenwand (2), besonders bevorzugt mindestens 50% der Höhe der mindestens einen Seitenwand (2), ganz besonders bevorzugt mindestens 75% der Höhe der mindestens einen Seitenwand (2), insbesondere mindestens 90% der Höhe der mindestens einen Seitenwand (2), wobei die Einbuchtung (6) bevorzugt
i) in einer zylindrischen Ausnehmung des Filterelements (4) angeordnet ist; und/oder
ii) mindestens eine sich in Richtung der mindestens einen Seitenwand (2) erstreckende Rippe, bevorzugt mindestens zwei sich in Richtung der mindestens einen Seitenwand (2) erstreckende Rippen, besonders bevorzugt mindestens vier sich in Richtung der mindestens einen Seitenwand (2) erstreckende Rippen, enthält, ganz besonders bevorzugt jeweils zwei Rippen gegenüberliegend angeordnet sind und sich die Rippen insbesondere entlang der Einbuchtung (6) des Bodens (1, 1') in Richtung Deckel (3) erstrecken, optional auf einer Länge, die mindestens 50% der Länge der mindestens einen Seitenwand (2) beträgt; und/oder
iii) eine Grundflächennut (8) enthält, die bevorzugt in einer parallel zum Deckel (3) angeordneten Grundfläche der Einbuchtung (6) angeordnet ist, besonders bevorzugt konzentrisch um eine Mittelachse einer Grundfläche des Deckels (3) angeordnet ist; und/oder
iv) eine Seitenflächennut (32) enthält, die bevorzugt in einer im Wesentlichen senkrecht zum Deckel (3) angeordneten Seitenfläche der Einbuchtung (6) angeordnet ist, besonders bevorzugt konzentrisch um eine Mittelachse einer Grundfläche des Deckels (3) angeordnet ist.

9. Filterkapsel gemäß einem der vorhergehenden Ansprüche, **dadurch gekennzeichnet, dass** die mindestens eine Seitenwand (2)
i) eine Höhe aufweist, die größer ist als die Höhe des Filterelements (4) bevorzugt 0,01 bis 5 mm, besonders bevorzugt 0,05 bis 4 mm, ganz besonders bevorzugt 0,1 bis 3 mm, insbesondere 0,2 bis 2 mm, größer; und/oder
ii) reversibel mit dem Deckel (3) verbunden ist, bevorzugt über eine formschlüssige und/oder kraftschlüssige Verbindung, besonders bevorzugt über eine Schraubverbindung oder Klemmverbindung, oder irreversibel mit dem Deckel (3) verbunden ist, bevorzugt über eine stoffschlüssige Verbindung, besonders bevorzugt über eine Schweißverbindung oder Klebeverbindung; und/oder
iii) eine Dicke im Bereich von 0,1 bis 2 mm, bevorzugt 0,2 bis 1,5 mm, besonders bevorzugt 0,3 bis 1,0 mm, insbesondere 0,4 bis 0,5 mm, aufweist; und/oder
iv) mindestens eine sich in Richtung des Filterelements (4) erstreckende Rippe, bevorzugt mindestens zwei sich in Richtung des Filterelements (4) erstreckende Rippen, besonders bevorzugt mindestens vier sich in Richtung des Filterelements (4) erstreckende Rippen, enthält, ganz besonders bevorzugt jeweils zwei Rippen gegenüberliegend angeordnet sind und sich die Rippen insbesondere entlang der mindestens einen Seitenwand (2) in Richtung Deckel (3) erstrecken, optional auf einer Länge, die mindestens 50% der Länge der mindestens einen Seitenwand (2) beträgt; und/oder
v) einen elastischen Bereich enthält oder daraus besteht, bevorzugt einen elastischen Bereich, dessen Elastizität durch eine bestimmte Dicke, eine bestimmte Geometrie und/oder ein bestimmtes Material bewirkt wird.

10. Filterkapsel gemäß einem der vorhergehenden Ansprüche, **dadurch gekennzeichnet, dass** der Deckel (3)
i) eine Grundfläche mit einer Länge, einer Breite und/oder einem Durchmesser aufweist, die/der größer ist als die Länge, die Breite und/oder der Durchmesser der Grundfläche des Filterelements (4), bevorzugt 0,01 bis 5 mm, besonders bevorzugt 0,05 bis 4 mm, ganz besonders bevorzugt 0,1 bis 3 mm, insbesondere 0,2 bis 2 mm, größer, wobei optional die Länge, Breite und/oder der Durchmesser des Deckels (3) größer ist als des Bodens (1, 1'); und/oder
ii) der mindestens eine Fluideinlass (9), der benachbart zu einer Mittelachse einer Grundfläche des Deckels (3) angeordnet ist , eine Membran zur Vermeidung von Abtropfen von Flüssigkeit aus der Filterkapsel enthält; und/oder
iii) Z der mindestens eine Fluidauslass (10), der entlang einer Mittelachse einer Grundfläche des Deckels (3) angeordnet ist besonders bevorzugt eine Membran zur Vermeidung von Abtropfen von Flüssigkeit aus der Filterkapsel enthält; und/oder
iv) auf einer dem mindestens einen Filterelement (4) abgewandten Seite mindestens eine, bevorzugt mindestens zwei, besonders bevorzugt mindestens vier, insbesondere mindestens acht, Abstandshalter (11) aufweist, die optional monolithisch mit dem Deckel (3) sind; und/oder
v) auf einer dem mindestens einen Filterelement (4) zugewandten Seite mindestens einen, bevorzugt mindestens zwei, besonders bevorzugt mindestens drei, insbesondere mindestens vier, Fluidkanäle (12) aufweist, die sich bevorzugt von einer Mitte einer Grundfläche des Deckels (3) in Richtung mindestens einer Seitenwand (2) der Filterkapsel erstrecken und besonders bevorzugt zu einer dem Deckel (3) zugewandten Seite des Filterelements (4), optional über eine Fluidkanalscheibe (14), geschlossen sind; und/oder
vi) eine Sollbruchstelle (13) aufweist, bevorzugt eine Membran, die dazu geeignet ist, im Falle eines Überdrucks den Fluidstrom in der Filterkapsel an dem Filterelement (4) vorbei zu lenken; und/oder
vii) eine Dichtungsfolie (34) aufweist, die einen Fluideinlass (9) und/oder Fluidauslass (10) des Deckels (3) fluiddicht verschließt; und/oder
viii) auf einer dem mindestens einen Filterelement (4) zugewandten Seite mindestens eine Erhebung, bevorzugt mindestens eine kreisförmige Erhebung (33), aufweist, die sich in Richtung Filterelement (4) erstreckt, bevorzugt in Richtung eines Feinstfilters des Filterelements (4) erstreckt, und den Raum zwischen Deckel (3) und Filterelement (4) flüssigkeitsdicht verschließt.

11. Filterkapsel gemäß einem der vorhergehenden Ansprüche, **dadurch gekennzeichnet, dass** die Filterkapsel eine Fluidkanalscheibe (14) enthält, die zwischen dem Deckel (3) und einer dem Deckel (3) zugwandten Seite des Filterelements (4) angeordnet ist, wobei die Fluidkanalscheibe (14) bevorzugt
i) eine durchgehende Ausnehmung (15) aufweist, wobei die durchgehende Ausnehmung (15) bevorzugt im Wesentlichen in der Mitte einer Grundfläche der Fluidkanalscheibe (14) angeordnet ist; und/oder
ii) auf einer dem mindestens einen Filterelement (4) zugewandten Seite mindestens einen, bevorzugt mindestens zwei, besonders bevorzugt mindestens drei, insbesondere mindestens vier, Fluidkanäle (16) aufweist, die sich bevorzugt von einer Mitte einer Grundfläche der Fluidkanalscheibe (14) in Richtung mindestens einer Seitenwand (2) der Filterkapsel erstrecken und besonders bevorzugt zu einer dem Deckel (3) zugewandten Seite des Filterelements (4), optional über eine Fluidkanalscheibe (14), geschlossen sind; und/oder
iii) auf einer dem mindestens einen Filterelement (4) zugewandten Seite mindestens eine Erhebung, bevorzugt mindestens eine kreisförmige Erhebung, aufweist, die sich in Richtung Filterelement (4) erstreckt, bevorzugt in Richtung eines Feinstfilters des Filterelements (4) erstreckt, und den Raum zwischen Fluidkanalscheibe (14) und Filterelement (4) flüssigkeitsdicht verschließt; und/oder
iv) eine Sollbruchstelle (13) aufweist, bevorzugt eine Membran, die dazu geeignet ist, im Falle eines Überdrucks den Fluidstrom in der Filterkapsel an dem Filterelement (4) vorbei zu lenken; und/oder
v) parallel zur einer Grundfläche des Deckels (3) angeordnet ist.

12. Filterkapsel gemäß einem der vorhergehenden Ansprüche, **dadurch gekennzeichnet, dass** die Filterkapsel mindestens eine Fluidleitung (17) enthält, die in einem Bereich benachbart zu einer Mittelachse durch eine Grundfläche des Deckels (3) durch den Deckel (3) in die Filterkapsel eintritt, sich auf einer dem Filterelement (4) zugewandten Seite des Deckels (3) in Richtung der mindestens einen Seitenwand (2) erstreckt, sich bevorzugt entlang der mindestens einen Seitenwand (2) erstreckt, sich besonders bevorzugt durch das mindestens eine Filterelement (4) erstreckt, sich ganz besonders bevorzugt in einen Bereich in der Mitte der Filterkapsel erstreckt und insbesondere entlang der Mittelachse durch die Grundfläche des Deckels (3) durch den Deckel (3) aus der Filterkapsel austritt.

13. Filterkapsel gemäß einem der vorhergehenden Ansprüche, **dadurch gekennzeichnet, dass** die Filterkapsel ein Fangsieb (18) enthält, das stromabwärts des mindestens einen Filterelements angeordnet ist, bevorzugt im Deckel (3) integriert ist oder zwischen dem Filterelement (4) und dem Deckel (3) angeordnet ist, und besonders bevorzugt eine Porengröße im Bereich von 50 bis 500 µm aufweist, ganz besonders bevorzugt eine Dicke von 0,1 mm bis 10 mm aufweist und insbesondere parallel zu einer Grundfläche des Deckels (3) angeordnet ist.

14. Filterkapsel gemäß einem der vorhergehenden Ansprüche, **dadurch gekennzeichnet, dass** die Filterkapsel mit einer Adapterkapsel (19) verbunden ist, wobei die Adapterkapsel (19) bevorzugt
i) dazu geeignet ist, mit einer Halterung einer Kaffeemaschine verbunden zu werden, bevorzugt über eine reversible Verbindung, besonders bevorzugt über einen Schraubverschluss, Klappverschluss und/oder Bajonettverschluss; und/oder
ii) mindestens einen Magneten (22) enthält, wobei der mindestens eine Magnet (22) bevorzugt dazu geeignet ist zu detektieren, ob die Adapterkapsel (19) mit einer Filterkapsel verbunden ist; und/oder
iii) mindestens ein über ein Federelement (21) gelagertes Fixierelement (20) enthält, wobei das Fixierelement (20) bevorzugt dazu geeignet ist, die Filterkapsel gegen eine Halterung einer Kaffeemaschine zu pressen, Insbesondere über Ausübung von Druck auf eine Einbuchtung (6) im Boden (1, 1') des Gehäuses des Filterelements (4) und besonders bevorzugt dazu geeignet ist, in Abwesenheit einer Filterkapsel zwischen einem Zulauf (27) und einem Ablauf (28) der Kaffeemaschine eine fluidische Verbindung herzustellen; und/oder
iv) mindestens eine Grundflächenausbuchtung (23) enthält, die bevorzugt dazu geeignet ist, in eine Grundflächennut (8) einer Einbuchtung (6) des Bodens (1, 1') des Gehäuses einzurasten; und/oder
v) mindestens eine Seitenflächenausbuchtung (24) enthält, die bevorzugt dazu geeignet ist, in einer Seitenflächennut (32) einer Einbuchtung (6) des Bodens (1, 1') des Gehäuses einzurasten.

15. Verwendung der Filterkapsel gemäß einem der vorhergehenden Ansprüche zur Nachfiltration von Kaffee.

## Claims

1. Filter capsule for secondary filtration of extracted coffee, wherein the filter capsule comprises a housing and at least one filter element (4) or consists thereof, the housing comprising a bottom (1, 1'), at least one side wall (2) and at least one cover (3) or consisting thereof and the at least one filter element (4) being disposed in an interior space of the housing, **characterized in that** the cover (3) has at least one through fluid inlet (9) which is disposed adjacent to a central axis of a base of the cover (3), and the cover (3) has at least one through fluid outlet (10).

2. Filter capsule according to claim 1, **characterised in that** the filter element (4) comprises
i) at least one filter which has a maximum pore size of 80 µm and preferably has a thickness of 0.1 mm to 10 mm; and/or
ii) at least one fine filter which preferably has a maximum pore size of 25 µm and, particularly preferably, has a thickness of 0.1 mm to 10 mm; and/or
iii) at least one ultrafine filter which preferably has a maximum pore size of 10 µm and, particularly preferably, has a thickness of 0.1 mm to 10 mm;
or consists thereof, the filter element (4) preferably comprising at least one filter, at least one fine filter and at least one ultrafine filter or consisting thereof and, particularly preferably, the at least one fine filter being disposed downstream of the filter and the at least one ultrafine filter downstream of the fine filter.

3. Filter capsule according to one of the preceding claims, **characterised in that** the filter element (4)
i) has a length, a width and/or a diameter in the range of 1 to 10 cm, preferably 2 to 9 cm, particularly preferably 3 to 8 cm, very particularly preferably 4 to 7 cm, in particular 5 to 6 cm; and/or
ii) has a height in a range of 1 to 14 cm, preferably 2 to 12 cm, particularly preferably 3 to 10 cm, very particularly preferably 4 to 8 cm, in particular 5 to 6 cm.

4. Filter capsule according to one of the preceding claims, **characterised in that** the filter element (4), preferably at least one filter, fine filter and/or ultrafine filter of the filter element (4) comprises
i) paper; and/or
ii) plastic material; and/or
iii) metal;
or consists thereof.

5. Filter capsule according to one of the preceding claims, **characterised in that** the filter element (4), preferably at least one filter, fine filter and/or ultrafine filter of the filter element (4), is essentially configured in the form of a straight or inclined cylinder, optionally having a straight or inclined cylindrical recess in the centre of the cylinder, the cylinder preferably having a base, provided optionally with a hole in the centre, which is selected from the group consisting of circular base, semi-circular base, sickle-shaped base, elliptical base and base with at least two corners, a circular base being particularly preferred.

6. Filter capsule according to one of the preceding claims, **characterised in that** the filter element (4), preferably at least one filter, fine filter and/or ultrafine filter of the filter element (4), is, by fluid, preferably by an aqueous solution, particularly preferably by coffee,
i) subjectable to a flow radially, preferably is subjectable to a flow of fluid coming upstream radially in the direction towards an axis of the cylinder and/or is subjectable to a flow of fluid coming downstream radially in the direction away from an axis of the cylinder; and/or
ii) subjectable to a flow axially, preferably is subjectable to a flow of fluid coming upstream in the direction along an axis of the cylinder from an upper side of the filter element (4) to a lower side of the filter element (4) and/or is subjectable to a flow of fluid coming downstream in the direction along an axis of the cylinder from a lower side of the filter element (4) to an upper side of the filter element (4).

7. Filter capsule according to one of the preceding claims, **characterised in that** the bottom (1, 1')
i) has a base with a length, a width and/or a diameter which is greater than the length, the width and/or the diameter of the base of the filter element (4), preferably 0.01 to 5 mm, particularly preferably 0.05 to 4 mm, very particularly preferably 0.1 to 3 mm, in particular 0.2 to 2 mm, greater, optionally, the length, width and/or the diameter of the cover (3) being greater than of the bottom (1, 1'); and/or
ii) has, on a side orientated towards the at least one filter element (4), at least one raised portion, preferably at least one circular raised portion (5), which extends in the direction of the filter element (4), preferably extends in the direction of an ultrafine filter of the filter element (4), and closes the space between bottom (1, 1') and filter element (4) in a liquid-impermeable manner; and/or
iii) has a thickness in the range of 0.1 to 2 mm, preferably 0.2 to 1.5 mm, particularly preferably 0.3 to 1.0 mm, in particular 0.4 to 0.5 mm; and/or
iv) comprises an elastic region or consists thereof, preferably an elastic region, the elasticity of which is produced by a specific thickness, a specific geometry and/or a specific material.

8. Filter capsule according to one of the preceding claims, **characterised in that** the bottom (1, 1') has a concavity (6) which extends in the direction of the cover (3), preferably at least 25% of the height of the at least one side wall (2), particularly preferably at least 50% of the height of the at least one side wall (2), very particularly preferably at least 75% of the height of the at least one side wall (2), in particular at least 90% of the height of the at least one side wall (2), the concavity (6) preferably
i) being disposed in a cylindrical recess of the filter element (4); and/or
ii) comprising at least one rib which extends in the direction of the at least one side wall (2), preferably at least two ribs which extend in the direction of the at least one side wall (2), particularly preferably at least four ribs which extend in the direction of the at least one side wall (2), very particularly preferably, respectively two ribs which are disposed situated opposite each other, and the ribs extending in particular along the concavity (6) of the bottom (1, 1') in the direction of the cover (3), optionally over a length which is at least 50% of the length of the at least one side wall (2); and/or
iii) comprising a base groove (8) which is disposed preferably in a base of the concavity (6) which is disposed parallel to the cover (3), is disposed particularly preferably concentrically about a central axis of a base of the cover (3); and/or
iv) comprising a side surface groove (32) which is disposed preferably in a side surface of the concavity (6) which is disposed essentially perpendicular to the cover (3), is disposed particularly preferably concentrically about a central axis of a base of the cover (3).

9. Filter capsule according to one of the preceding claims, **characterised in that** the at least one side wall (2)
i) has a height which is greater than the height of the filter element (4), preferably 0.01 to 5 mm, particularly preferably 0.05 to 4 mm, very particularly preferably 0.1 to 3 mm, in particular 0.2 to 2 mm, greater; and/or
ii) is connected reversibly to the cover (3), preferably via a form-fit and/or frictional connection, particularly preferably via a screw connection or clamped connection or irreversibly to the cover (3), preferably via an integral connection, particularly preferably via a welded joint or adhesive joint; and/or
iii) has a thickness in the range of 0.1 to 2 mm, preferably 0.2 to 1.5 mm, particularly preferably 0.3 to 1.0 mm, in particular 0.4 to 0.5 mm; and/or
iv) comprises at least one rib which extends in the direction of the filter element (4), preferably at least two ribs which extend in the direction of the filter element (4), particularly preferably at least four ribs which extend in the direction of the filter element (4), very particularly preferably, respectively two ribs which are disposed situated opposite each other, and in particular, the ribs extend along the at least one side wall (2) in the direction of the cover (3), optionally over a length which is at least 50% of the length of the at least one side wall (2); and/or
v) comprises an elastic region or consists thereof, preferably an elastic region, the elasticity of which is produced by a specific thickness, a specific geometry and/or a specific material.

10. Filter capsule according to one of the preceding claims, **characterised in that** the cover (3)
i) has a base with a length, a width and/or a diameter which is greater than the length, the width and/or the diameter of the base of the filter element (4), preferably 0.01 to 5 mm, particularly preferably 0.05 to 4 mm, very particularly preferably 0.1 to 3 mm, in particular 0.2 to 2 mm, greater, optionally, the length, width and/or the diameter of the cover (3) being greater than of the bottom(1, 1'); and/or
ii) the at least one fluid inlet (9), which is disposed adjacent to a central axis of a base of the cover (3), comprises a membrane for avoiding dripping of liquid out of the filter capsule; and/or
iii) the at least one fluid outlet (10), which is disposed along a central axis of a base of the cover (3), particularly preferably comprises a membrane for avoiding dripping of liquid out of the filter capsule; and/or
iv) has, on a side orientated away from the at least one filter element (4), at least one, preferably at least two, particularly preferably at least four, in particular at least eight, spacers (11) which are optionally monolithic with the cover (3); and/or
v) has, on a side orientated towards the at least one filter element (4), at least one, preferably at least two, particularly preferably at least three, in particular at least four, fluid channels (12) which extend preferably from a centre of a base of the cover (3) in the direction of at least one side wall (2) of the filter capsule, and are closed, particularly preferably, on a side of the filter element (4) orientated towards the cover (3), optionally via a fluid-channel disc (14); and/or
vi) has a predetermined breaking point (13), preferably a membrane which is suitable for directing the fluid flow in the filter capsule past the filter element (4), in the case of high pressure; and/or
vii) has a sealing foil (34) which closes a fluid inlet (9) and/or fluid outlet (10) of the cover (3) in a fluid-impermeable manner; and/or
viii) has, on a side orientated towards the at least one filter element (4), at least one raised portion, preferably at least one circular raised portion (33), which extends in the direction of the filter element (4), preferably extends in the direction of an ultrafine filter of the filter element (4), and closes the space between cover (3) and filter element (4) in a liquid-impermeable manner.

11. Filter capsule according to one of the preceding claims, **characterised in that** the filter capsule comprises a fluid-channel disc (14) which is disposed between the cover (3) and a side of the filter element (4) orientated towards the cover (3), the fluid-channel disc (14) preferably
i) having a through recess (15), the through recess (15) preferably being disposed essentially in the centre of a base of the fluid-channel disc (14); and/or
ii) having, on a side orientated towards the at least one filter element (4), at least one, preferably at least two, particularly preferably at least three, in particular at least four, fluid channels (16) which extend preferably from a centre of a base of the fluid-channel disc (14) in the direction of at least one side wall (2) of the filter capsule, and are closed, particularly preferably, on a side of the filter element (4) orientated towards the cover (3), optionally via a fluid-channel disc (14); and/or
iii) having, on a side orientated towards the at least one filter element (4), at least one raised portion, preferably at least one circular raised portion, which extends in the direction of the filter element (4), preferably in the direction of an ultrafine filter of the filter element (4), and closes the space between fluid-channel disc (14) and filter element (4) in a fluid-impermeable manner; and/or
iv) having a predetermined breaking point (13), preferably a membrane, which is suitable for directing the fluid flow in the filter capsule past the filter element (4), in the case of high pressure; and/or
v) being disposed parallel to a base of the cover (3).

12. Filter capsule according to one of the preceding claims, **characterised in that** the filter capsule comprises at least one fluid line (17) which, in a region adjacent to a central axis, enters through a base of the cover (3), through the cover (3) into the filter capsule, extends, on a side of the cover (3) orientated towards the filter element (4), in the direction of the at least one side wall (2), extends preferably along the at least one side wall (2), extends particularly preferably through the at least one filter element (4), extends very particularly preferably into a region in the centre of the filter capsule and in particular exits out of the filter capsule along the central axis through the base of the cover (3) through the cover (3).

13. Filter capsule according to one of the preceding claims, **characterised in that** the filter capsule comprises a collection strainer (18) which is disposed downstream of the at least one filter element (4), preferably is integrated in the cover (3) or is disposed between the filter element (4) and the cover (3), and, particularly preferably, has a pore size in the range of 50 to 500 µm, very particularly preferably, has a thickness of 0.1 mm to 10 mm, and in particular, is disposed parallel to a base of the cover (3).

14. Filter capsule according to one of the preceding claims, **characterised in that** the filter capsule is connected to an adapter capsule (19), the adapter capsule (19) preferably
i) being suitable for being connected to a mounting of a coffee machine, preferably via a reversible connection, particularly preferably via a screw closure, hinged closure and/or bayonet closure; and/or
ii) comprising at least one magnet (22), the at least one magnet (22) preferably being suitable for detecting whether the adapter capsule (19) is connected to a filter capsule; and/or
iii) comprising at least one fixing element (20) mounted via a spring element (21), the fixing element (20) preferably being suitable for pressing the filter capsule against a mounting of a coffee machine, in particular by exerting pressure on a concavity (6) in the bottom (1, 1') of the housing of the filter element (4), and particularly preferably being suitable for producing a fluidic connection in the absence of a filter capsule between an inflow (27) and an outflow (28) of the coffee machine; and/or
iv) comprising at least one base convexity (23) which is preferably suitable for engaging in a base groove (8) of a concavity (6) of the bottom (1, 1') of the housing; and/or
v) comprising at least one side-surface convexity (24) which is preferably suitable for engaging in a side-surface groove (32) of a concavity (6) of the bottom (1, 1') of the housing.

15. Use of the filter capsule according to one of the preceding claims for secondary filtration of coffee.

## Revendications

1. Capsule filtrante pour la post-filtration de café extrait, dans laquelle la capsule filtrante contient un boîtier et au moins un élément filtrant (4) ou en est constituée, dans laquelle le boîtier contient un fond (1, 1'), au moins une paroi latérale (2) et au moins un couvercle (3) ou en est constitué et l'au moins un élément filtrant (4) est disposé dans un espace intérieur du boîtier, **caractérisée en ce que**
le couvercle (3) présente au moins une entrée de fluide (9) continue, qui est disposée de manière adjacente à un axe central d'une surface de base du couvercle (3), et
le couvercle (3) présente au moins une sortie de fluide (10) continue.

2. Capsule filtrante selon la revendication 1, **caractérisée en ce que** l'élément filtrant (4)
i) contient au moins un filtre, qui présente une taille de pores maximale de 80 µm et présente de préférence une épaisseur de 0,1 mm à 10 mm ; et/ou
ii) contient au moins un filtre fin, qui présente de préférence une taille de pores maximale de 25 µm et de manière particulièrement préférée une épaisseur de 0,1 mm à 10 mm ; et/ou
iii) contient au moins un filtre ultrafin, qui présente de préférence une taille de pores maximale de 10 µm et de manière particulièrement préférée une épaisseur de 0,1 mm à 10 mm ;
ou en est constitué, dans laquelle l'élément filtrant (4) contient de préférence au moins un filtre, au moins un filtre fin et au moins un filtre ultrafin ou en est constitué et de manière particulièrement préférée l'au moins un filtre fin est disposé en aval du filtre et l'au moins un filtre ultrafin est disposé en aval du filtre fin.

3. Capsule filtrante selon l'une quelconque des revendications précédentes, **caractérisée en ce que** l'élément filtrant (4)
i) présente une longueur, une largeur et/ou un diamètre dans la plage de 1 à 10 cm, de préférence 2 à 9 cm, de manière particulièrement préférée 3 à 8 cm, mieux encore 4 à 7 cm, en particulier 5 à 6 cm ; et/ou
ii) présente une hauteur dans une plage de 1 à 14 cm, de préférence 2 à 12 cm, de manière particulièrement préférée 3 à 10 cm, mieux encore 4 à 8 cm, en particulier de 5 à 6 cm.

4. Capsule filtrante selon l'une quelconque des revendications précédentes, **caractérisée en ce que** l'élément filtrant (4), de préférence au moins un filtre, filtre fin et/ou filtre ultrafin de l'élément filtrant (4), contient
i) du papier ; et/ou
ii) du plastique ; et/ou
iii) du métal ;
ou en est constitué.

5. Capsule filtrante selon l'une quelconque des revendications précédentes, **caractérisée en ce que** l'élément filtrant (4), de préférence au moins un filtre, filtre fin et/ou filtre ultrafin de l'élément filtrant (4), est configuré sensiblement sous la forme d'un cylindre droit ou incliné, éventuellement avec un évidement cylindrique droit ou incliné au centre du cylindre, dans laquelle le cylindre présente de préférence une surface de base, éventuellement pourvue d'un trou au centre, qui est choisie dans le groupe constitué par une surface de base circulaire, une surface de base semi-circulaire, une surface de base en forme de croissant, une surface de base elliptique et une surface de base avec au moins deux coins, dans laquelle une surface de base circulaire est particulièrement préférée.

6. Capsule filtrante selon l'une quelconque des revendications précédentes, **caractérisée en ce que** l'élément filtrant (4), de préférence au moins un filtre, filtre fin et/ou filtre ultrafin de l'élément filtrant (4), peut être traversé par un fluide, de préférence une solution aqueuse, de préférence encore du café,
i) radialement, de préférence peut être traversé radialement en direction d'un axe du cylindre par un fluide venant de l'amont et/ou peut être traversé radialement dans une direction s'écartant d'un axe du cylindre par un fluide venant de l'aval ; et/ou
ii) peut être traversé axialement, de préférence par un fluide venant de l'amont dans une direction le long d'un axe du cylindre depuis un côté supérieur de l'élément filtrant (4) vers un côté inférieur de l'élément filtrant (4) et/ou peut être traversé par un fluide venant de l'aval dans une direction le long d'un axe du cylindre depuis un côté inférieur de l'élément filtrant (4) vers un côté supérieur de l'élément filtrant (4).

7. Capsule filtrante selon l'une quelconque des revendications précédentes, **caractérisée en ce que** le fond (1, 1')
i) présente une surface de base avec une longueur, une largeur et/ou un diamètre qui est plus grand(e) que la longueur, la largeur et/ou le diamètre de la surface de base de l'élément filtrant (4), de préférence de 0,01 à 5 mm, de manière particulièrement préférée de 0,05 à 4 mm, mieux encore de 0,1 à 3 mm, en particulier de 0,2 à 2 mm, plus grand(e), dans laquelle éventuellement la longueur, la largeur et/ou le diamètre du couvercle (3) est plus grand(e) que celui(celle) du fond (1, 1') ; et/ou
ii) présente sur un côté tourné vers le au moins un élément filtrant (4) au moins une élévation, de préférence au moins une élévation circulaire (5), qui s'étend en direction de l'élément filtrant (4), de préférence s'étend en direction d'un filtre ultrafin de l'élément filtrant (4), et ferme l'espace entre le fond (1, 1') et l'élément filtrant (4) de manière étanche aux liquides ; et/ou
iii) présente une épaisseur dans la plage de 0,1 à 2 mm, de préférence de 0,2 à 1,5 mm, de manière particulièrement préférée de 0,3 à 1,0 mm, en particulier de 0,4 à 0,5 mm ; et/ou
iv) contient une zone élastique ou en est constituée, de préférence une zone élastique dont l'élasticité est provoquée par une certaine épaisseur, une certaine géométrie et/ou un certain matériau.

8. Capsule filtrante selon l'une quelconque des revendications précédentes, **caractérisée en ce que** le fond (1, 1') présente un renfoncement (6) qui s'étend en direction du couvercle (3), de préférence sur au moins 25 % de la hauteur de la au moins une paroi latérale (2), de manière particulièrement préférée au moins 50 % de la hauteur de la au moins une paroi latérale (2), mieux encore au moins 75 % de la hauteur de la au moins une paroi latérale (2), en particulier au moins 90 % de la hauteur de la au moins une paroi latérale (2), dans laquelle le renfoncement (6) de préférence
i) est disposé dans un évidement cylindrique de l'élément filtrant (4) ; et/ou
ii) contient au moins une nervure s'étendant en direction de la au moins une paroi latérale (2), de préférence au moins deux nervures s'étendant en direction de la au moins une paroi latérale (2), de manière particulièrement préférée au moins quatre nervures s'étendant en direction de la au moins une paroi latérale (2), mieux encore respectivement deux nervures sont disposées à l'opposé l'une de l'autre et les nervures s'étendent en particulier le long du renfoncement (6) du fond (1, 1') en direction du couvercle (3), éventuellement sur une longueur qui atteint au moins 50 % de la longueur de la au moins une paroi latérale (2) ; et/ou
iii) contient une rainure de surface de base (8), qui est de préférence disposée dans une surface de base du renfoncement (6) disposée parallèlement au couvercle (3), de manière particulièrement préférée est disposée de manière concentrique autour d'un axe central d'une surface de base du couvercle (3) ; et/ou
iv) contient une rainure de surface latérale (32), qui est de préférence disposée dans une surface latérale du renfoncement (6) disposée sensiblement perpendiculairement au couvercle (3), de manière particulièrement préférée est disposée de manière concentrique autour d'un axe central d'une surface de base du couvercle (3).

9. Capsule filtrante selon l'une quelconque des revendications précédentes, **caractérisée en ce que** la au moins une paroi latérale (2)
i) présente une hauteur qui est plus grande que la hauteur de l'élément filtrant (4) de préférence de 0,01 à 5 mm, de manière particulièrement préférée de 0,05 à 4 mm, mieux encore de 0,1 à 3 mm, en particulier de 0,2 à 2 mm, plus grande ; et/ou
ii) est reliée de manière réversible au couvercle (3), de préférence par l'intermédiaire d'une liaison par complémentarité de formes et/ou à force, de manière particulièrement préférée par l'intermédiaire d'une liaison par vissage ou liaison par serrage, ou est reliée de manière irréversible au couvercle (3), de préférence par l'intermédiaire d'une liaison de matière, de manière particulièrement préférée par l'intermédiaire d'une liaison soudée ou liaison adhésive ; et/ou
iii) présente une épaisseur dans la plage de 0,1 à 2 mm, de préférence de 0,2 à 1,5 mm, de manière particulièrement préférée de 0,3 à 1,0 mm, en particulier de 0,4 à 0,5 mm ; et/ou
iv) contient au moins une nervure s'étendant en direction de l'élément filtrant (4), de préférence au moins deux nervures s'étendant en direction de l'élément filtrant (4), de manière particulièrement préférée au moins quatre nervures s'étendant en direction de l'élément filtrant (4), mieux encore respectivement deux nervures sont disposées à l'opposé l'une de l'autre et les nervures s'étendent en particulier le long de la au moins une paroi latérale (2) en direction du couvercle (3), éventuellement sur une longueur qui atteint au moins 50 % de la longueur de la au moins une paroi latérale (2) ; et/ou
v) contient une zone élastique ou en est constituée, de préférence une zone élastique dont l'élasticité est provoquée par une certaine épaisseur, une certaine géométrie et/ou un certain matériau.

10. Capsule filtrante selon l'une quelconque des revendications précédentes, **caractérisée en ce que** le couvercle (3)
i) présente une surface de base avec une longueur, une largeur et/ou un diamètre qui est plus grand(e) que la longueur, la largeur et/ou le diamètre de la surface de base de l'élément filtrant (4), de préférence de 0,01 à 5 mm, de manière particulièrement préférée de 0,05 à 4 mm, mieux encore de 0,1 à 3 mm, en particulier de 0,2 à 2 mm, plus grand(e), dans laquelle éventuellement la longueur, la largeur et/ou le diamètre du couvercle (3) est plus grand(e) que celui(celle) du fond (1, 1') ; et/ou
ii) la au moins une entrée de fluide (9), qui est disposée de manière adjacente à un axe central d'une surface de base du couvercle (3), contient une membrane pour éviter que le liquide ne s'égoutte de la capsule filtrante ; et/ou
iii) la au moins une sortie de fluide (10), qui est disposée le long d'un axe central d'une surface de base du couvercle (3), contient de manière particulièrement préférée une membrane pour éviter que le liquide ne s'égoutte de la capsule filtrante ; et/ou
iv) présente sur un côté opposé à l'au moins un élément filtrant (4) au moins une, de préférence au moins deux, de manière particulièrement préférée au moins quatre, en particulier au moins huit éléments d'écartement (11), qui sont éventuellement monolithiques avec le couvercle (3) ; et/ou
v) présente sur un côté tourné vers l'au moins un élément filtrant (4) au moins un, de préférence au moins deux, de manière particulièrement préférée au moins trois, en particulier au moins quatre canaux de fluide (12), qui s'étendent de préférence depuis un centre d'une surface de base du couvercle (3) en direction d'au moins une paroi latérale (2) de la capsule filtrante et de manière particulièrement préférée sont fermés vers un côté de l'élément filtrant (4) tourné vers le couvercle (3), éventuellement par l'intermédiaire d'un disque de canal de fluide (14) ; et/ou
vi) présente un point de rupture (13), de préférence une membrane, qui est adaptée pour dévier le flux de fluide dans la capsule filtrante devant l'élément filtrant (4) en cas de surpression ; et/ou
vii) présente une feuille d'étanchéité (34), qui ferme de manière étanche aux fluides une entrée de fluide (9) et/ou sortie de fluide (10) du couvercle (3) ; et/ou
viii) présente sur un côté tourné vers l'au moins un élément filtrant (4) au moins une élévation, de préférence au moins une élévation circulaire (33), qui s'étend en direction de l'élément filtrant (4), de préférence s'étend en direction d'un filtre ultrafin de l'élément filtrant (4), et ferme l'espace entre le couvercle (3) et l'élément filtrant (4) de manière étanche aux liquides.

11. Capsule filtrante selon l'une quelconque des revendications précédentes, **caractérisée en ce que** la capsule filtrante contient un disque de canal de fluide (14), qui est disposé entre le couvercle (3) et un côté de l'élément filtrant (4) tourné vers le couvercle (3), dans laquelle le disque de canal de fluide (14) de préférence
i) présente un évidement traversant (15), dans laquelle l'évidement traversant (15) est de préférence disposé sensiblement au centre d'une surface de base du disque de canal de fluide (14) ; et/ou
ii) présente sur un côté tourné vers l'au moins un élément filtrant (4) au moins un, de préférence au moins deux, de manière particulièrement préférée au moins trois, en particulier au moins quatre canaux de fluide (16), qui s'étendent de préférence depuis un centre d'une surface de base du disque de canal de fluide (14) en direction d'au moins une paroi latérale (2) de la capsule de filtre et de manière particulièrement préférée sont fermés vers un côté de l'élément filtrant (4) tourné vers le couvercle (3), éventuellement par l'intermédiaire d'un disque de canal de fluide (14) ; et/ou
iii) présente sur un côté tourné vers le au moins un élément filtrant (4) au moins une élévation, de préférence au moins une élévation circulaire, qui s'étend en direction de l'élément filtrant (4), de préférence s'étend en direction d'un filtre ultrafin de l'élément filtrant (4), et ferme de manière étanche aux liquides l'espace entre le disque de canal de fluide (14) et l'élément filtrant (4) ; et/ou
iv) présente un point de rupture (13), de préférence une membrane, qui est adaptée pour dévier le flux de fluide dans la capsule filtrante devant l'élément filtrant (4) en cas de surpression ; et/ou
v) est disposé parallèlement à une surface de base du couvercle (3).

12. Capsule filtrante selon l'une quelconque des revendications précédentes, **caractérisée en ce que** la capsule filtrante contient au moins une conduite de fluide (17), qui entre dans la capsule filtrante à travers le couvercle (3) dans une zone adjacente à un axe central à travers une surface de base du couvercle (3), s'étend sur un côté du couvercle (3) tourné vers l'élément filtrant (4) en direction de la au moins une paroi latérale (2), s'étend de préférence le long de la au moins une paroi latérale (2), s'étend de manière particulièrement préférée à travers le au moins un élément filtrant (4), s'étend mieux encore dans une zone au centre de la capsule filtrante et sort de la capsule filtrante à travers le couvercle (3) en particulier le long de l'axe central à travers la surface de base du couvercle (3).

13. Capsule filtrante selon l'une quelconque des revendications précédentes, **caractérisée en ce que** la capsule filtrante contient un tamis de capture (18), qui est disposé en aval de l'au moins un élément filtrant, est de préférence intégré dans le couvercle (3) ou est disposé entre l'élément filtrant (4) et le couvercle (3), et de manière particulièrement préférée présente une taille de pores dans la plage de 50 à 500 µm, mieux encore présente une épaisseur de 0,1 mm à 10 mm et en particulier est disposé parallèlement à une surface de base du couvercle (3).

14. Capsule filtrante selon l'une quelconque des revendications précédentes, **caractérisée en ce que** la capsule filtrante est reliée à une capsule d'adaptation (19), dans laquelle la capsule d'adaptation (19) de préférence
i) est adaptée pour être reliée à un support d'une machine à café, de préférence par l'intermédiaire d'une liaison réversible, de manière particulièrement préférée par l'intermédiaire d'une fermeture à vis, fermeture à clapet et/ou fermeture à baïonnette ; et/ou
ii) contient au moins un aimant (22), dans laquelle le au moins un aimant (22) est de préférence adapté pour détecter si la capsule d'adaptation (19) est reliée à une capsule filtrante ; et/ou
iii) contient au moins un élément de fixation (20) monté par l'intermédiaire d'un élément ressort (21), dans laquelle l'élément de fixation (20) est de préférence approprié pour presser la capsule filtrante contre un support d'une machine à café, en particulier par l'exercice d'une pression sur un renfoncement (6) dans le fond (1, 1') du boîtier de l'élément filtrant (4) et de manière particulièrement préférée est adapté pour établir une liaison fluidique entre une arrivée (27) et une évacuation (28) de la machine à café en l'absence d'une capsule filtrante ; et/ou
iv) contient au moins un renflement de surface de base (23), qui est de préférence adapté pour s'encliqueter dans une rainure de surface de base (8) d'un renfoncement (6) du fond (1, 1') du boîtier ; et/ou
v) contient au moins un renflement de surface latérale (24), qui est de préférence adapté pour s'encliqueter dans une rainure de surface latérale (32) d'un renfoncement (6) du fond (1, 1') du boîtier.

15. Utilisation de la capsule filtrante selon l'une quelconque des revendications précédentes pour la post-filtration de café.
